# EUROPEAN PATENT SPECIFICATION

(11) **EP 1 709 537 B1**
(45) Date of publication and mention of the grant of the patent: **26.09.2012**
(21) Application number: 04743669.6
(22) Date of filing: 06.08.2004
(51) Int. Cl.: G06F 11/34

(54) **METHOD AND APPARATUS FOR UNIFIED PERFORMANCE MODELING WITH MONITORING AND ANALYSIS OF COMPLEX SYSTEMS**
VERFAHREN UND VORRICHTUNG ZUR VEREINIGTEN LEISTUNGSFÄHIGKEITSMODELLIERUNG MIT ÜBERWACHUNG UND ANALYSE KOMPLEXER SYSTEME
PROCEDE ET APPAREIL DE MODELISATION UNIFIEE DE PERFORMANCES AVEC CONTROLE ET ANALYSE DE SYSTEMES COMPLEXES

(30) Priority: 06.08.2003 US 492842 P
(43) Date of publication of application: 11.10.2006
(73) Proprietor: Halevy, Moshe, Hampton, Middlesex TW12 2LW (GB)
(72) Inventor: Halevy, Moshe, Hampton, Middlesex TW12 2LW (GB)
(74) Representative: Finnie, Peter John
(86) International application number: PCT/GB2004/003383
(87) International publication number: WO 2005/015404

(56) References cited:
- EP-A- 0 940 754
- US-A- 5 347 647
- US-A1- 2002 022 942
- DIEFENBRUCH M ET AL: "THE QUEST-APPROACH FOR THE PERFORMANCE EVALUATION OF SDL-SYSTEMS" FORMAL DESCRIPTION TECHNIQUES. PROCEEDINGS OF THE IFIP WG 6.1 INTERNATIONAL CONFERENCE ON FORMAL DESCRIPTION TECHNIQUES, 8 October 1996 (1996-10-08), pages 229-244, XP008012431
- HRISCHUK C E ET AL: "TRACE-BASED LOAD CHARACTERIZATION FOR GENERATING PERFORMANCE SOFTWARE MODELS" IEEE TRANSACTIONS ON SOFTWARE ENGINEERING, IEEE INC. NEW YORK, US, vol. 25, no. 1, January 1999 (1999-01), pages 122-135, XP000850011 ISSN: 0098-5589

## Description

### FIELD OF THE INVENTION

The invention generally relates to performance analysis, for example, targeted at enterprises or third party service providers worldwide. More particularly, the disclosed embodiment relates to a method and system that facilitates information technology (IT) and telecommunication performance analysis services for most enterprises worldwide at an affordable price.

### BACKGROUND

System Performance is often the central aspect during a software lifecycle of design, development, and configuration-tuning. It is not always enough to know that systems work properly, they must also work effectively. Research in several areas such as information technology (IT) and telecommunication, military, health care, financial-services, etc, has shown that resources of time, money, (lives!), can be saved if the performance of a system is optimized. Performance analysis studies are conducted in order to evaluate existing or planned systems and to compare alternative configurations in the aim of finding an optimal configuration for a system. Currently Performance Engineering, is split into three categories: Performance Monitoring (Measurement), Load-Testing (Benchmarking) and Performance Modeling (Simulation, Analytical and Numerical Methods). Systems' Architecture is fixed configuration based such as client-server or dynamic configuration based such distributed system (e.g. Web Services based service oriented architecture (SOA), Agent based systems).

Back-of the-envelope performance predictions, such as raw basic machine characteristics analysis, is a very risky and ineffective method, given the complexity of performance-engineering analysis needed in a multidimensional systems performance space. Current market solutions mainly promote performance monitoring activity, where performance modeling is provided as a supplement.

With respect to enterprise's systems cost reduction measures, as much as one would like to take a structured approach towards cost cutting, a balance must be kept so a system does not fail to support the business-operations. Precise and cost-effective methods in managing these challenges are needed, but it is a reality that decisions concerning systems performance are based on guesswork by most companies. In other cases there is a degree of limited usage of performance engineering practices such as load testing, performance monitoring of transactional or web application and software-vendors performance-optimization (tuning) applications (e.g. such as applications from SAP of Walldorf, Germany, and Oracle of Redwood Shores, California, United States of America).

In current operation/application managers who require delivering the expected subject-matter system' service levels are doing their job "blind-folded". This is mainly as the means available by current art to conduct a proper performance engineering analysis are limited due to:
1) Mounting costs. If one tries to integrate various existing performance engineering tools into one, its costs and particularly their operator labor costs will accrue to a large sum; hence not COST EFFECTIVE but to the very large corporations;
2) Such tools are NOT well integrated;
3) Seamless and complete analysis enabling a 'big picture' analysis of how enterprise's systems architecture is utilized is by concept and technology is not available in the market.
4) Performance analysis based on load testing is inflexible, since the results only relate to a specific architecture at a fixed point in time. Hence model based load testing became obsolete with relatively small architecture's design variation.
5) Performance modeling tools based statistical-analysis and mathematical-modeling techniques are very expensive, require major in-house resources to operate, and typically only focus on a particular aspect of the overall system.
6) Performance monitoring solutions typically report problems too early, resulting in unnecessary expenditure, or too late, resulting in system failure.

This magnitude of such lack of knowledge is increasingly becoming a major factor of concern for many businesses as 'systems' performance is degraded in direct correlation to the increased complexity derived from today's system's architecture complexity.

The bottom-line impact of the current overall limited performance analysis practices is VERY significant: 'overkill' hardware (e.g. low capacity utilization average of 60% or less, based on survey of Chief Information Officers (CIO) conducted by Mark Techstrat of Merrill Lynch the investment bank, published on March 11^{th} 2002), business operations interruption as a results of 'systems' performance failure that is based on on-going or change-request operations, mounting re-development costs in new systems development/integration projects where system's architecture re-design is needed as performance is well below requirements. In dollar terms a lot of waste investments and resources take place.

Fundamentally, in many companies the operational director/manager cannot tell with any confidence that: (1) He/She has cost cut as much as possible without exposing the company to the risk of losing revenue as direct result of system failure (2) That the operational function has the fundamental system attributes associated with the ability to cope with growing business demands or business dynamics. This lack of confidence originates from lack of essential understanding of how enterprise systems (hardware and software) are utilized in relation to the business process they support.

The only service concept available is of software vendors providing generic products to Clients, with the exception of very limited performance monitoring products of Keynote Systems Inc. of San Mateo, California, United States of America, and BMC Software, Inc. of Houston, Texas, United States of America, where it is assumed that enterprise clients have the skilled resources for operating such tools. It can be argued that such concept can only work with very large organizations able to invest in retained skill Performance-Analyst staff, whose skills cover: system-metrics analysis, capacity planning, statistical analysis, mathematical modeling and system requirements skills.

Another caveat of providing software products directly to enterprises is that each product covers limited scenarios out of the overall scenarios of performance monitoring and capacity planning (by performance modeling). Hence, companies are required to purchase several software products which aren't well integrated and need expert skill to operate. This can result in relatively high costs compared with value return. Based on return on investment (ROI) analysis companies would be put off from making such an investment towards performance analysis service catering for their systems. Resulting in the mid to large size companies market not being supported by cost effective and comprehensive performance engineering.

Performance analysis involves with system's data in digital format. This data is important for system maintenance but isn't actively used in clients' production systems for business application support. It means that performance analysis services can be purchased on flexible terms from able and specialized service providers. These services can be sold and managed as commodities.

Another aspect for consideration is that the computing requirements of monitoring and modeling algorithms at large aren't feasible to process at source i.e. at clients' site. Therefore, any performance-analysis at source is limited in scope. This leads to a degrading of the value of the analysis. Scope is limited as computing performance-analysis algorithms at source will result in counter productivity rather then performance improvement. Hence, client-site analysis techniques have drawbacks.

Modeling and Monitoring processes and data currently are loosely coupled. One can do modeling or monitoring, but cannot do both within one component's interface. This raises the following problems:
1) One cannot conduct performance monitoring (with drill down capability) based on the precise 'system architecture' model. Currently building a model from scratch is needed while setting monitoring definitions at the monitoring component, rather than passing such a model as an object after building it in a modeling component
2) It is hot straight forward to calibrate a 'system' model by reflecting on the model image the system resources share and its forecast, all generated from monitoring objects interfaces. Hence, model building effort is increased with a negative impact on cost and time.
3) One cannot have 'big-picture' capability to view concurrently 'system's' model reflected with its monitoring data. One cannot view how enterprise systems are utilized in relation to the business process they support. Such view is indispensable as an analytical tool when dealing with performance issues or when performing a what-if analysis by modeling.

Thus, no known technology provides a method and a apparatus for performance monitoring and analysis that addresses some of the problems associated with the prior art, with respect to the full cycle of system's architecture, balancing effort of analysis where:
1) Performance Monitoring is used, on an ongoing basis, as a tactical process to detect and isolate performance problems for quick fixes or as an alert for conducting performance modeling (optimization);
2) Performance Modeling is used, on an on-demand basis, as a strategic process targeting optimization of system's architecture.

This hence promotes equal usage of these critical processes as needed, offering a complete solution for enterprise Clients with the aim of providing a high accuracy performance engineering analysis and capacity planning.

"Other performance evaluation tools which systematically processing performance evaluation model from UML model using conversion rules, such as NEC Corporation of Tokyo of Japan (Patent Application -- publication number: US002022942, title: "Apparatus and method for producing a performance evaluation model", inventor: Nakamura Toshihiko, publication date: 2002-02-21) are known. This tool aim to verifying design output in UML scripts in term of performance capability. The tool allows to process UML diagrams (e.g. sequence/class diagrams) by straight conversion rule to chum out performance indicators. Its technical features are different In construction then PoF Model with PoFs properties. It neither Is not based worst cases scenarios analysis, nor allow to auto generated the models in finer granularity as in the PoFs Model. It is also, lack the properties of reduce amount of data associated with system performance as in PoF Model nor to allow any modelling following by monitoring capabilities as in PoF Model."

In addition, there is a need for a method and apparatus for converging practices of software-engineering design with 'production' system/network administration, when feasible during system life-cycle, as per computing needs reflected by the dynamics of the business process the system supports.

Another long felt need in the industry is to allow the essential understanding of how systems' architecture is utilized with relation to the business processes they support; to have 'just in time and just right' structured approach for maximizing investment into the system and managing its resources .

### STATEMENT OF THE INVENTION

Aspects of the present invention cover a method of performed modelling according to independent claim 1, a computing device according to independent claim 7 and a computer program product according to claim 8. Preferred embodimens are disclosed in the dependent

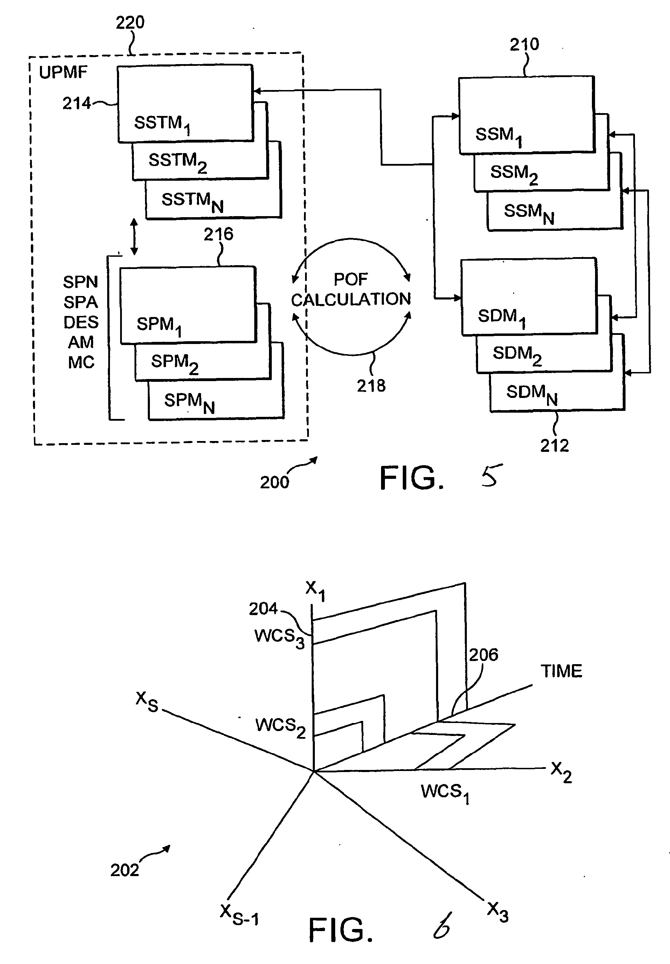

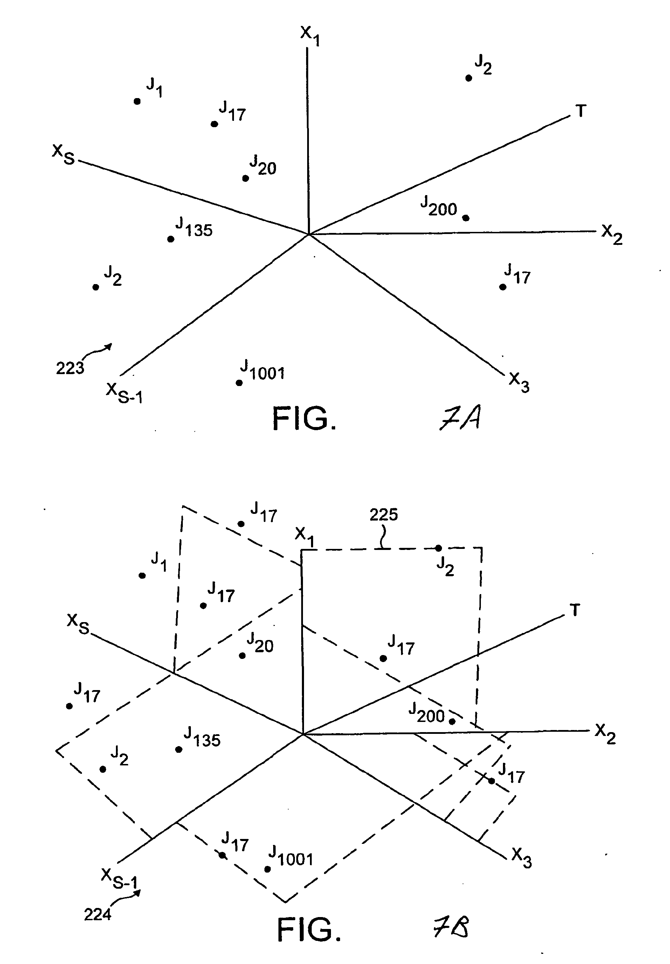

An embodiement provides a method for performance monitoring and analysis of a system, comprising:
constructing a representative synthetic workload model (SWM) closed n-dimensions space of the system's n resources parameters where system's real workload is occur (re FIG.7A; SWM's edges are characterized by constraints defined In correlation to bottleneck of the system's resources (re FIG. 7B showing 225) and that system's worst case scenarios (WCS) are performed closed to its edges (re FIG. 7B showing J17); comprising
compacting further SWM model in limiting its parameters to pre-selected s key system performance parameters;
selecting a key parameter indicative of system performance of the derived SWM s-closed space;
monitoring by search of the combinations of this parameter for all possible other parameters where this parameter is above certain defined constraints threshold within search period range (re FIG. 6 showing 202); and identifying at least one worst case scenario (WCS (re FIG.6 showing 204) by building Intermediary table for said parameter during a period of time the system is run;
further search to match the probability of real to synthetic model by selecting a sequence of WCSs with Its probability or use stochastic probability;
constructing in a modelling language (ML) a system scenario model (SSM) (re **FIG.5,5** **showing 210**) and system deployment model (SDM) (re FIG. 5,5 showing 212) pair for each WCS, the SSM representative of System Components Interaction during the period of time, and the SDM representative of system components for monitoring during the period of WCS time and constructed using existing methods, and the SDM SSM mapped directly from the SDM;
constructing a (SSTM) associated with the SSM, the SSTM (re **FIG.5** **showing** 214) representative of the model where statechart Inserted Into each object In the collaboration's objects listed in the SSM; for each WCS search through Intermediary data tables constructed and for each WCSs set pointers per individual entry and conduct search at all logs for valid patterns (reference to a similar pattern possible in the SDM) of set event; then SSM model is convert from linked pattern events In temporary table; SSTM Is generated automatically with the Input of the correlated SSM using existing techniques;
extracting a system performance model (SPM) from the SSTM using existing techniques; and
applying a predetermined set of system conditions to the SPM (re FIG.5 showing 216) to model and thereafter monitoring a point of failure (PoF) (re FIG.5 showing 218] characterized by parameter threshold associated with system's point of failure modelled by the PoF Model (re FIG.5 showing 200)."

An embodiment provides a method for performance monitoring and analysis of a system, means for constructing a representative synthetic workload model (SWM) closed n-dimensions space of the system's n resources parameters where system's real workload is occur (re FIG.7A; SWM's edges are characterized by constraints defined in correlation to bottleneck of the system's resources (re FIG. 7B showing 225) and that system's worst case scenarios (WCS) are performed closed to its edges (re FIG.7B showing J17); comprising
means for compacting further SWM model In limiting its parameters to pre-selected s key system performance parameters;
means for selecting a key parameter indicative of system performance of the derived SWM s-clossd space;
means for monitoring by search of the combinations of this parameter for all possible other parameters where this parameter is above certain defined constraints threshold within search period range (re FIG. 6 showing 202); and identifying at least one worst case scenario (WCS) (re FIG.6 showing 204) by building Intermediary table for said parameter during a period of time the system is run;
means for further search to match the probability of real to synthetic model by selecting a sequence of WCSs with its probability or use stochastic probability;
means for constructing in a modelling language (ML) a system scenario model (SSM) (re FIG.5 showing 210) and system deployment model (SDM) (re FIG.5 showing 212) pair for each WCS, the SSM representative of System Components Interaction during the period of time, and the SDM representative of system components for monitoring during the period of WCS time and constructed using existing methods, and the SSM mapped directly from the SDM;
means for constructing a associated with the SSM, the SSTM (re FIG.5 showing 214) representative of the model where statechart inserted into each object in the collaboration's objects listed in the SSM; for each WCS search through intermediary data tables constructed and for each WCSs set pointers per individual entry and conduct search at all logs for valid patterns (reference to a similar pattern possible in the SDM) of set event; then SSM model is convert from linked pattern events in temporary table; SSTM Is generated automatically with the input of the correlated SSM using existing techniques;
means for extracting a system performance model (SPM) from the SSTM using existing techniques; and
means for applying a predetermined set of system conditions to the SPM (re FIG. 5 showing 216) to model and thereafter monitoring a point of failure (PoF) (re FIG.5 showing 218) characterized by parameter threshold associated with system's point of failure modelled by the PoF Model (re FIG.5 showing 200)."

An embodiment may provide a method and apparatus that provides refined granularity of the level of analysis using client system's (the system analysed) architecture raw data in technical format such as system/application resources metrics, system/transaction logs, etc., and transforms by algorithms to provide a result that is manageable and useful data modelling the representation of the analysed system. Enabling modelling with monitoring converging into one framework, combining several modelling disciplines of simulation/analytical/numerical into a single interface, application service providers collaboration, asynchronously and autonomously, engaging in solving client's technical issues that require fine-granularity system performance technical analysis.

Other embodiments provide a method and apparatus that identifies worst case scenarios (WCSs). The method comprising by: (1) initially analyzing subject-matter system data (i.e. system resources metrics, transaction/system logs, etc) as per global system key performance parameters set, verify for completeness; (2) then, using pre-defined system key system performance set then analyze system's worst case time slots in each parameter from this set, by using a define search time period of constraint parameters.

Other embodiments provide a method and apparatus that model reverse engineers using multiple search process as per synthetic workload model for each identified WCS from WCSs set. A method comprising by using trace data construct SDM; if data is available, then construct per each WCS from WCSs set an SSM object; mapping using interim data tables, mapping is per objects mapped in SDM, using data set in interim data tables, to construct each SSM and its system state model (SSTM), while keep links to SDM by objects links. The step of mapping may be repeated until all SSMs have been built.

Other embodiments provide a method and apparatus that constructs PoFs for each interim PoFi (i = 1,2,...) is resulted of calculating an average value as per current evaluated system performance parameter (e.g. CPU Queue) in relation to a defined system resource constraints and overall response time as per currently evaluated SSM from the SSMs set; (2) once in simulation run, of the SPM, if the simulated system reach response time above define value (as define in SDM (default value set to current average plus 1-3 sigma by PMF's Utilization functions)) or reach limitation in system resource as defined then at this point it mark the level in system performance parameter as a PoFt. Another embodiment may provide a method and apparatus that constructs Final PoFs by using model verification techniques then calculating the probability using state data in SSTM and SPM with data of system overall run time then for each PoFt calculating such probability; resulting with PoFs set. Another embodiment may provide a method and apparatus that enables prediction as per any design type variation of subject-matter system-architecture's and its associated point of failure set (PoFs) as per its current state and the system computing limitations; it provides a critical information allowing 'just in time' and 'just right' system's architecture design management; A method comprising: (1) Via UPMF's Experiment Analysis functions creating a new what-if model by create new copy of live PoFs' associated with models with trace feed connection; (2) made design update in SDMs (and in their SSMs); (3) calibrate and re-run SPMs and further steps to mark PoFs as baseline1, baseline 2, etc; (4) measure PoFs as per baseline point across of PoFs until reach optimum PoFs set (OPoFs), i.e. OPoFs set is defined as system's architecture with the lowest cost and with high 'mileage' design configuration as per business processes requirements it supports; this method is through UPMF's Experiment Analysis functions.

Other embodiments may provide a method and apparatus that enables optimization of subject-matter system' usage patterns (by users or batch workload) by iterative optimization using their associated PoFs data, identifying OPoFs set by: (1) trial and error of system's workload patterns adjustments, by shifting system's usage by users/batches and review PoFs results, or (2) using copy data as received by conducting analysis SPM, edit trace data prior to re-calculation of SPMs, then re-run PoFs calculation and compare PoFs per each baseline until identify OPoFs set, this method is avail via UPMF's Experiment Analysis functions.

Other embodiments may provide a method or apparatus that visual and interactive aid PoFs Insight technical feature enabling to visually and dynamically review System's architecture's PoFs data in conjunction with their model (SSMs, SMDs) and other performance metrics, e.g. response times, SLA, QoS etc. This technical feature is using to generate PoF as well as what if analysis, also used at any point during the system or component life cycle locally or remotely in a network environment; its hence simplify performance review activity by reduction of performance data, while increase quality and completeness of performance scope; also, it enhances the scope and cost effectiveness for Visual aid PoFs Insight of subject-matter systems supported, by allowing this feature to perform from one interface as per systems' architecture which has dynamic or fixed configuration.

### BRIEF DESCRIPTION OF THE DRAWINGS

A method and system incorporating the present invention will now be described, by way of example only, with reference to the accompanying drawings, in which:
FIG. 1 shows a schematic block diagram of a system in accordance with an embodiment of the invention;

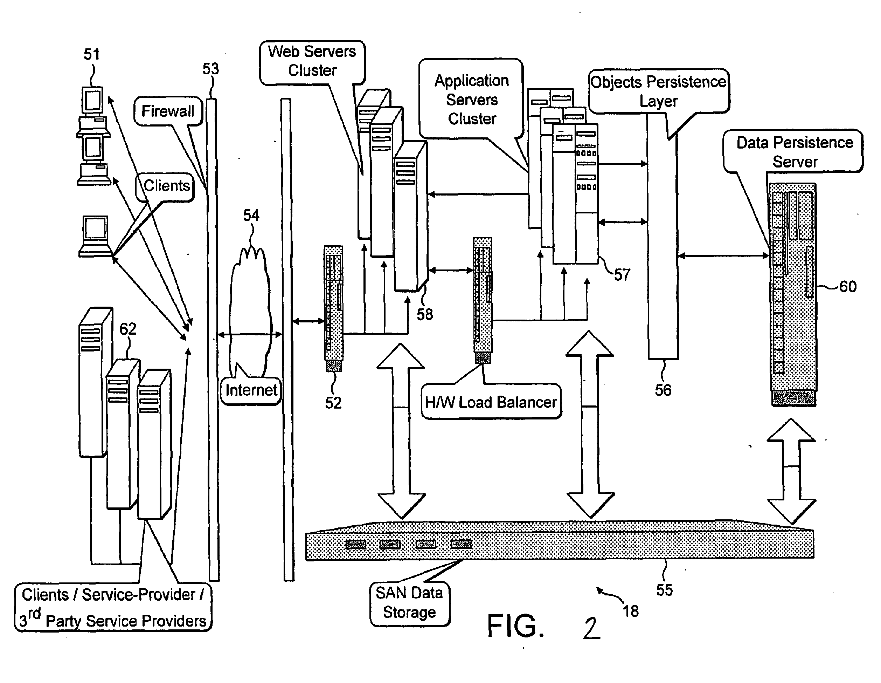

FIG.2 shows a schematic block diagram of a system in accordance with an embodiment of the invention;
FIG.3 shows block diagram of a model blocks and corresponding block functionality of a system in accordance with an embodiment of the invention;
FIG.4 shows block diagram of a model blocks and corresponding block functionality of a system in accordance with an embodiment of the invention;
FIG. 5 shows a schematic block diagram of an apparatus in accordance with an embodiment of the invention for performance monitoring and analysis of a system;
FIG.6 shows a graph of worst case scenarios for selected parameters in accordance with an embodiment of the invention;
FIG.7A-B show graphs of deriving parameters for worst case scenario selection in accordance with an embodiment of the invention;

### DETAILED DESCRIPTION

A technical novel solution by system and method, which solves long felt need by the industry for focused, flexible, efficient and cost effective performance engineering analysis solutions. All technical and process components included are increasing value of refined performance engineering analysis for the end user, then of current art, by its novel technical features and enabling interface to exist performance engineering tools and tapping on performance analyst expertise available.

An embodiment of the invention for processing data represents the physical entities of a computer's hardware and software components. It affects the efficiency and cost-effectiveness of a computer in relation to the business process its supports, by managing the technical process of the computer performance engineering analysis process. It contains records on the computer resources metrics and transactions and transforming them into meaningful data be to be re-configured and re-parameterized computer for better efficiency; as well, it provides design insight enabling better technical design decisions as per architecture fit to the business process it supports.

The innovation introduces a novel method and system implementation offering a balancing effort of subject-matter system' architecture analysis, during system's life cycle, where: (1) performance modeling with monitoring (Point of Failures technical effect) is used, on on-going basis, to detect and isolate design configuration/parameterization problems for quick fixes or as an alert for conducting system's architecture design iterative optimization by performance modeling; (2) modeling is used, on on-demand basis, as an iterative optimization process targeting optimization of system architecture's design. Conducting such analysis is beyond human capability.

### System and Model Embodying the Invention:

Apparatus scope of an embodiment is: monitoring and analyzing the performance of enterprises' 'system' (e.g. transactional or web-based (distributed) application, IT infrastructure, etc). Specifically, this includes IT performance monitoring, performance modeling

One method of an embodiment comprises receiving 'system' measurement metrics and 'system' architecture model data at system's designated web site. Data will come from multiple hardware-devices/software-components that together will comprise the 'system'. Automatic monitoring is by identification of abnormality failure events or patterns in 'normal workload' patterns. Statistical analysis methods can be used. The system provides summary reports with highlights on areas of interest where further action/performance-analysis is required. It provides automatic alerts for areas where performance shortfalls are expected.

### System's Point of Failures (PoFs) Technology

That system modeling tools, such as BMC's Analytical Modeling or the application Simulation from Hyperformix Inc. of Austin, Texas, United States of America, etc., are rarely used because it is difficult to model a complete system in a unified environment, i.e. different tools and modeling techniques are needed for different hardware / software components configuration or different stages of system life cycle (with or without trace data). Such tools are expensive and require skilled resources to operate.

"Other performance evaluation tools which systematically processing performance evaluation model from UML model using conversion rules, such as NEC Corporation of Tokyo of Japan (Patent Application -- publication number: US002022942, title: "Apparatus and method for producing a performance evaluation model", inventor: Nakamura Toshihiko, publication date: 2002-02-21). This tool aim to verifying design output in UML scripts in term of performance capability. The tool allows to process UML diagrams (e.g. sequence/class diagrams) by straight conversion rule to chum out performance indicators. Its technical features are different In construction then PoF Model with PoFs properties. It neither is not based worst cases scenarios analysis, nor allow to auto generated the models in finer granularity as in the PoFs Model. It is also, lack the properties of reduce amount of data associated with system performance as in PoF Model nor to allow any modelling following by monitoring capabilities as in PoF Model."

To increase modeling automation and methodology in order to achieved reduction of skill labor cost. To enable PoFs calculation by interfacing with Performance Monitoring functions. To enable performance modeling of subject-matter system's architecture based dynamic or fixed architecture, from one interface, using similar modeling methodology. To enable conducting modeling as needed, in line with ad-hoc needs pattern, with low or no effort needed to construct the model or re-calibrate it. Make such modeling activity a better cost effect solution.

By loose-coupling modeling to modeling implementation (MI) and by modeling in stages, where such stages are managed by one component, allows modeling scale-up from one interface of systems based dynamic or fixed configurations. Also, use of a wizard-tool component is assisting in conducting a consistent modeling methodology by: (1) identifying a problem domain and formulating the problem definition; (2) following by, model formulation with Modeling Editor component; (3) following by, use of a method selector applying the model to a specific method; (4) following by, completing the model definition per selected method (e.g. Stochastic Process Algebra (SPA)). At this stage the model is fine tuned by calibration. Calibration is conducted by reviewing monitoring data populated by interfaces or by creating another model object using the same process by using a different modeling method (e.g. Layer Queuing Network Modeling) and measuring models simulation results like to like. All models once created can be copied for view only or for further modeling for a what-if analysis; it hence allows model object to be created and populated with trace/stochastic data and models can be branched from each other. All modeling is formulated and processed at a designated remote site.

PoFs are defined as system's resources level where the system cannot perform most, for example 85%, of its computing requirements as per the business processes it supports. Currently there is no clarity, existing solutions provide no high accuracy and are very expensive, when trying to conduct system architecture's PoFs prediction, dynamically and with high precision. This is as per subject-matter system's architecture, which are dynamic or fixed configurations based (e.g. Agent based computer system based Web-Service technology or order system based client sever architecture respectively). The problem origin is that system performance modeling and monitoring processes and their data currently is loose coupling. One can do modeling or monitoring, but cannot do both within one component's interface, as steps from one cyclic and unified process. That current system "probes" can provide data on thousands of parameters within enterprise software and hardware systems, yet there is no clear way to determine how these parameters and thresholds should be used to give a reliable measure of utilization and upgrade requirements.

This lack of confidence originates from lack of essential understanding of how enterprise systems (hardware and software) are dynamically utilized, exactly, in relation to the business processes they support.

In an embodiment, a new paradigm of performance engineering by PoFs, where PoFs are identified and monitored dynamically during system's life-cycle. Enabling adaptive identification and monitoring of PoFs with respect to subject-matter system's architecture design (based fixed and/or dynamic configurations), allowing to maintain up to date system's model and its PoFs. Enabling to measure system's performance, with high accuracy, in term of its systems resources with relation to the systems' architecture design. It hence allowed simplification, efficiency and cost effectiveness in monitoring and optimized system architecture as per the business processes it supports.

In an embodiment a concept is introduced where system's modeling process interlinks with system's monitoring process. It offers intelligent performance monitoring with higher accuracy predictions and better cost-effectiveness then current art. It is based on the insight that both "processes" can be one cyclical process, hence "unified modeling and monitoring analysis". Modeling data is determined after some data transformations the system Point of . Failures (PoFs) set as per systems' performance parameters set. These PoFs set represents a compact set that predicts a system point of failure as per the synthetic workload of the system. The PoFs hence represent, with least data feasible, the system health in its ability to maintain system's workload in correlation to time dimension. It has high accuracy with up to 90-95% statistical confidence, of simulation modeling; as well simulation is synthetic workload based, which results in that a simulation model can be created and processed faster then system complete simulation. The PoFs set enables increased value and efficiency for technical decisions per system's architecture design and maintenance. This is by a simple and pin-pointed correlation of design update and re-configured/re-parameterized to its predicted end-result, enabling 'just in time and just right' capacity planning. It hence solves the technical problem of system performance monitoring current solutions. These typically reports problems too early, resulting in over capacity (i.e. unnecessary expenditure), or too late, resulting in under capacity (i.e. system failure); It is due to their non-linear attribute of their functions and the inherent complexity of their system' architecture model.

The input data used is subject-matter system's resource metrics based, system/transaction logs, etc. This data is analyzed in order to determine key performance parameters and worst case performance as per each parameter. Then by tagging data automatically through mapping components in dynamic construction of system architecture deployment model and worst case scenarios model as per key performance parameters. The representation of these models is standard model language based used in prior art, hence enabling system architects/designers and performance analysts view in a common language. Further models are constructed from the new formed models and system's data; enabling to extract performance model from these models; by using embodiment's Unified Performance Modeling Framework (UPMF) features. It allows to create a performance model Stochastic Petri Net based, Stochastic Process Algebra, Discrete Event Simulation, etc; this is as per subject-matter system's architecture synthetic workload state positions. Such performance model is linked with its source models and data; it is hence dynamically updated with the synthetic workload updates.

All technical processes are automatic and evolving, resulting in an adaptive view of PoFs and associated models of current status of system architecture. Its adaptability allows viewing and optimizing as per system's architecture configuration changes or business' process workload changes (usage patterns) by optimizing PoFs. It also allows an enhanced drill down system diagnostic by using PoFs data with its associated models, then current prior art.

This embodiment has been formulated so its intelligent performance prediction by PoFs and enhanced performance modeling can be used from one interface to provides performance engineering technical analysis of distributed (dynamic) and non-distributed (fixed) based systems' architecture. As long as system probes are feed into the Apparatus, non-distributed and distributed system's architecture will be analyzed. In cases of very complex distributed system's architecture this embodiment's features can be used for performance engineering analysis of system's agent component rather then the whole system, for example in the case of a bank credit check, the system is connected via Web Services technologies.

### PoFs Synthetic Workload Model Construction based WCS

FIG. 6,7A and 7B show graphs 202, 223, 224 of worst case scenario generation for selected parameters. A method disclosed in an article by Sreenivasan and Kleinman (S&K), "On the construction of representative synthetic workload." Communications of ACM, 17(3): 127-133, March 1974, offers the view that system's demand is occurred in Xs dimensions of System's resources (S is discrete number of system's resources - hardware and software, e.g. I/O rate); where some resources are more influencing the workload model then other, such influences are marked by weights Wj (1 ≤j ≤S) associated with Xi , WjXi. Such demand is represented by Ji (1 ≤i ≤N, where Ji is computing Job and N can be very large discrete number) as shown in graph 223 of FIG.7A. The S&K method is too complex to use: (1) when number of discrete computing Jobs (Ji) is very high; as S&K method was design for mainframe computing where in modern Client Server and Distributing computing there are many Jobs occur concurrently that needs to be included in the workload model; (2) its synthetic workload model (SWM) formulas calculations are too complex; (3) synthetic workload modeling not allows for software engineering practice to use in conjunction with performance monitoring and analysis practice, by allow to have common synthetic model view with properties concern both practices. This embodiment method uses three principals from S&K method of: (1) Xs workload model space of system's resources, where system's demand is occurred; (2) SWM is equivalent (or a good approximation) to real system's workload, if the density probability of synthetic and real workload is the same; (3) SWM is derived from real workload using Constraints.

The embodiment' feature offers improvement on S&K method by: (1) the Constraints are defined in correlation to bottleneck of the system's resource (e.g. system's CPU), where some Xi (1 ≤i ≤S) have certain value associated (e.g. X1 ≥2 and X2 ≥90%, where X1 is CPU-QUEUE and X2 is CPU UTIL - Utilization); hence it different from S&K method where Constraint defines as cap on system's resource for the modelling's time period; (2) in relation to (1) above, then values of Xi in conjunction of Xj, Xk (1 ≤ij,k ≤S) can be different then in its conjunction with X1 (1 ≤1 ≤S). It emerges from above that in Xs dimensions space of system's resources is closed by the edged form by these Constraints, re FIG.7B showing the graph 224. All system's Jobs Jj (1≤j ≤P ≤N, where Jj is computing Job and P can be very large discrete number) outside the edges of the now Xs dimensions closed space, (e.g. marked by bold lines orthogonal to Xs axes in FIG. 7B, are where the computing is with delay factor of the bottlenecks. Equally, all Jobs Jk (1 ≤k ≤N, where Jk is computing Job and N can be very large discrete number) within the edges 225 of the closed space are where Jobs performed without bottleneck effect.

Some of the Jobs on the edges of this closed space are part of Worst Case Scenarios (WCSs). Worst case Scenario is when many of its computing Jobs are closed to the edges of this closed space. Worst Case Scenario is continues sequence of Jobs in discrete time; hence we ignore all Jobs that are not related to WCSs, as their effect to cause system resource's bottleneck is significantly low in comparison to those Jobs in WCSs. FIG.6 shows a graph 202 of WCS 204,206.

The propose method is performed upon Xi (1 ≤i ≤Sk ≤S, in comparison to S&K synthetic workload model ), where Sk is the number of key system performance parameters; further reduction of synthetic workload model data is expected on by using bottleneck Constraints; lets marked Xsk closed space as X§. Then a search on each such Xi is conducted to identify time period where Xi is above certain define Constraints threshold, e.g., within the search period range. X1 ≥2, X1 is CPU QUEUE; this is for a define other Constraint - Time, e.g. T = 30 minutes; this search is for combination ofXj, X1, etc with (1 ≤j,1,.. ≤§-1) as per each edge of this closed space (e.g. X1 is CPU_QUEUE ≥2 and X2 is CPU-UTTL ≥ 90%, X1 is CPU QUEUE ≥1.75 and X3 is Active Processors > = 150). The result of search is a WCSI set (1 ≤1 ≤M) then we search to match the probability of real (i.e. open space Xs) to synthetic (closed space X§) by selecting a sequence of WCSs with its probability (e.g. to use for DES, Network Queuing modeling) or use stochastic probability (e.g. SPA, SPN)

Referring to FIG.5, an embodiment is shown of an apparatus 200 having system scenario model (SSM) 210, system deployment model (SDM) 212, system state model (SSTM) 214, system performance model (SPM) 216. The interaction, components names, object and implementation of embodiments is discussed. A Modeling Workshop Manager component (MWMC) is initiated; then a call is made to initiated a Modeling Editor component (MEC); in MEC a new Model object (of client's) is created or allows to open existing Model object; (a) in case of new Model object, then it open dialog box of selection of: (I) work with trace data or (II) without; then Analyst selected Client System ID (CSID) from Client option of file menu; (b) in case of exists Model object then an Analyst selected Client System ID (CSID) from Client option of file menu; in case of (I) then a PoFs Projection Manager component (PoFPMC) is initiated with passing reference to the Model object; then a call for Worst Case Scenario (WCS) Identification Component (WCSIC) is initiated with passing reference to the Model object; in WCSIC Analyst made selection of System Type list window (e.g. client server base Unix, Web Server based Linux, etc), once a selection is made then UI window is open with list of key system performance parameters (KSPPs) or key component performance parameters (KCPPs) with their pre-define associated weights WiXj , 1 ≤i,j ≤s, as shown in the graph 202 of FIG.6; then Analyst is updated this list of WiXj as see fit; then Analyst is open a search constraints criteria UI window, by make selection in main UI menu; the selection is set at default value, in systems parameters, for: (1) one month data from that current date; (2) search period of Monday - Friday (3) search interval of one hour between 8am-6pm; (4) value of Xj with reference to other Xi , e.g. Xj CPU-QUEUE ≥1.5 and Xi = CPU UTIL ≥90%, (constrains criteria can be expanded in options in the system's parameters); then Analyst is made amendment to the Model's search constraints criteria as see fit; this search is save as store procedure in data-warehouse; then a job request is made to Monitoring-Exception Scheduler component (MESC) which interact with Grid's Optimization Resource Manager component (GORMC); on selection of job type (i.e. WCS search) Analyst made selection of: schedule time to perform calculation, priority, reference to store procedure object; once store procedure initiated by GORMC then search is conducted on all data as per the selected CSID in the CC's data warehouse; selection is for highest mean value of Xj with constraints set before, while following synthetic workload existing principles; each such selected time period is set to intermediary table of time period as identified in the search, e.g. two WCSi selected per X1 measurement data of Unix server - CPU-QUEUE, re FIG. 6, now a search is conducted on all said system/transaction logs, etc and build in the intermediary tables the data allocated for that time period; this done for all WCSj identified as per all Xi, WCS objects are contain reference to its associated intermediary tables; on success then WCSIC return reference to Model object, otherwise return error message to PoFPMC; then PoFPMC return to Modeling Workshop Manger component (MWMC) with reference to Model object; MWMC is then initiated Worst Cases Scenarios Models Construction component (WCSMC) with reference to Model Object; WCSMC is then load intermediary table set before and for each WCS object of WCSs, at initiation it construct the objects: SSM, SDM of unified modeling language (UNIL)-Model object; SDM 212 on constructing is call a method with reference to Model object to mapped architecture into system deployment model based UML, this by extract from XML format made by 3^{rd} party tool (e.g. HP OpenView Net-Manager); such data is updated at data warehouse on frequency set in System's parameters (e.g. every day); the extract to SDM view is using 3^{rd} party tool; then SDM object UI method is open the SDM UI window by call to method from reference of Enterprise/Application Architecture Mapper component (EAAMC) via MEC; Analyst made update to SDM view model as see fit; then search is made to all items in intermediary table as per WCS time period; then tagged all items in the table and then using recursive function search of link between tagged items to each other; per each pattern links then check for reference to occurrence as per SDM linked reference; on valid links then checked for tagged item pattern accuracy as per value in System parameter at SSM 210; on error then generate exceptions; if exception raised then analyst call to view all linked logs via call in file menu, logs appeared in UI table window, then Analyst can made manual update of data(debugging) and re-start the process; once process complete successfully then SSMs and SDMs pairs as per WCS are linked, then a SSTM 214 object is constructed; then two objects constructed per SSTM: SSTM Statechart and SSTM collaboration; on construction, object made call to method to auto-generated from SSM object's model the statechart and collaboration model respectively; on exception then Analyst can manually updated SSM's model script via call to MEC's method, otherwise return success; then MWMC initiated Modeling-Problem Formulation Wizard component (MPFWC); the MPFWC object on construction load selection made before or open default selection; Analyst made selection following performance modeling guideline pre-define in script in System's parameters; the selection from UI windows call in sequence once selection is made; Analyst made selection of modeling parameters and guided through structure methodology to select method on some selection an calculation by method call will be made on Model's data; such selection data is save in Model's object; on selecting of modeling method a call is made to Methods Selector component (MSC) which construct via UPMF 220 object as per selection made in MPFWC, e.g. SPA was selected as method which create an object of Numerical-Modeling Methods Management component (NMMMC) where PEPA API method is generate SPM 216 object using SSTM object; on error raised exception or return Model object to MWMC after made call to Performance Analysis Measurement Component (PAMC) which generate job request to MESC to calculated performance metrics as per each Model object's SDM; in case of (II) MEC, via MWMC, using selected CSID made call to construct SDM (re FIG.5 and 6 1-(3), which SDM object constructed as per reference to XML format generated by 3^{rd} party tool (e.g. IBM's Rational Rose) and SSM is constructed in similar way to SDM; this process is repeated for all SSMs and SDMs pairs mapped in system data from Client site; then SSTM and SPM per each SSM is constructed in similar way as above; SPM correspond to the state of the selected stochastic process; to generate PoFt then Analyst made call via MWMC to MEC, where Analyst can load Model object using CSID implementing a model verification transformation; a UI window of SSMs and SDM window appears where SDM UI window show data as per linked current active SSM; Analyst can at this point update the constraints at Systems parameters and re-start a new Model (e.g. reduce time period from 1 to 0.5 hours, CPU-QUEUE level from 1.5 to 2.5) or analyst can delete SSMs (and their associated SDMs, SSTMs and SPMs) as see fit; once Analyst have compact set to progress in calculating PoFt then Analyst can start calibrating SPM; this by: via open SDM UI Window (MEC method) then set per each SSMs the SLA/QoS values by call to Monitoring Against SLAs/QoSs/FoFs Targets component (MASQFTC), by making selection in right mouse option; on object constructing it check with 'traced' Model object if performance metrics are existed, if not return an exception; SLA/QoS value are set by interactively set value on SDM per each active SSM from Model object's SSMs set; Analyst can modify model performance parameters by selection an option in SDM's file menu; then Analyst select to run the Model's SPM by making selection in right mouse option; this will generate a job request to Models-Execution Scheduler component (MOESC), which will interact with Grid's Optimization Resource Manager component (GORMC) and schedule time for call store procedure call with SPM value as per SLA/QoS to simulate each SPM; on completion this procedure will initiated a call to PoFs Identification component (POSIC); then in POSIC via 3^{rd} party software API (e.g. Probabilistic Symbolic Model Checker (PRISM) by Department of Computer Science, University of Birmingham) will calculate PoF from each PoFt by using computing requirement data load with system log; if such computing data isn't available then PoFt is set to PoF in the Model object, as shown by arrows in FIG. SPoF calculation 218.

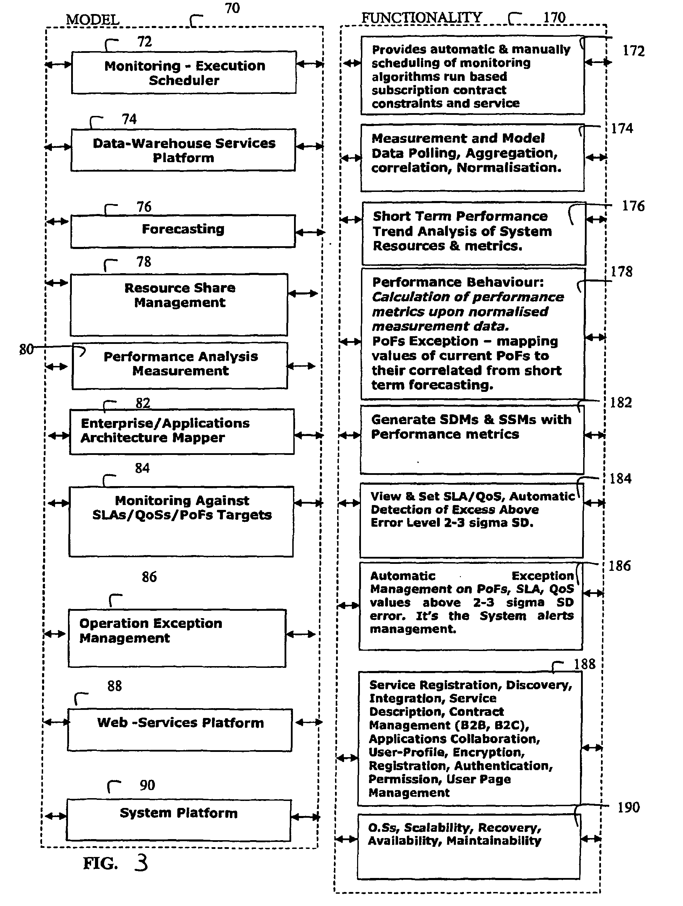

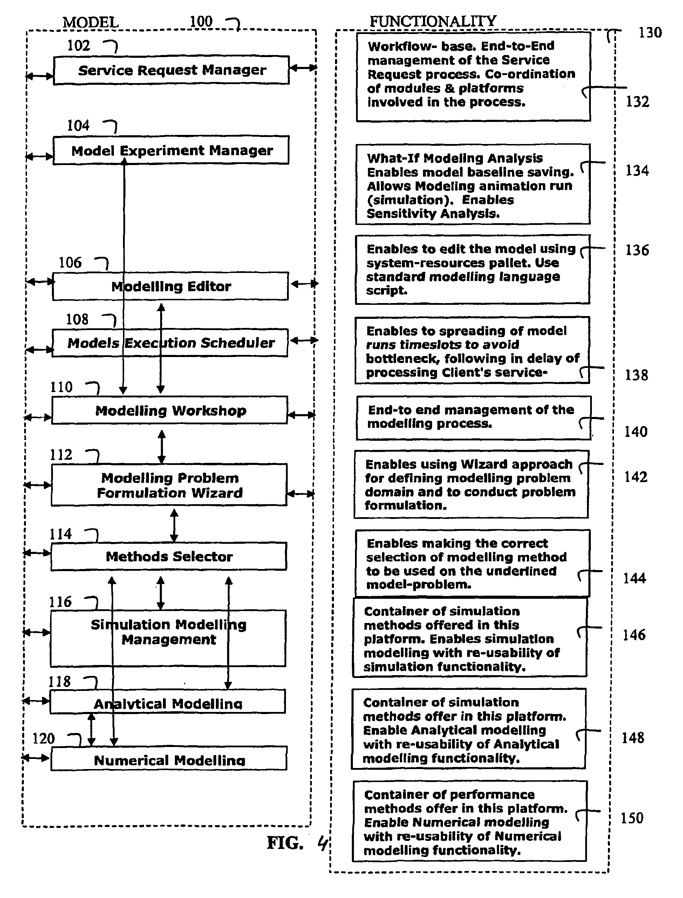

In case of (b) Model Experiment Manger component (MEMC) 104,134 is initiated, which subsequently load the Model Object in its construction, use CSID as reference; MEMC allows visual interactive that allows model copy (by construction a new model object), and update this object data (SSM, SDM and their associated SSTM and SPM); it allows using different modeling methods, as described above; MEMC provides the What-If modeling analysis by making modification to raw data (usage pattern data, effect SSMs) as per WCS, system configuration (effects SDM) and SSM and review PoFs updated predictions, as shown in FIG.3 and 4. FIG. 3 and 4 show a block diagram of model blocks 70,100 and corresponding block functionality 170,130, respectively, of an embodiment of the invention. In FIG. 3, models and corresponding functionalities shown are: Monitoring - Execution Scheduler 72,172; Data-Warehouse Services Platform 74,174; Forecasting 76,176; Resource Share Management 78,178; Performance Analysis Measurement 80,178; Enterprise/Applications Architecture Mapper 82,182; Monitoring Against SLAs/QoSs/PoFs Targets 84,184; Operation Exception Management 86,186; Web-Services Platform 88,188; and System Platform 90,190. In FIG. 4, models and corresponding functionalities shown are: Service Request Manager 102,132; Model Experiment Manager 104,134; Modeling Editor 106,136; Models Execution Scheduler 108,138; Modeling Workshop 110,140; Modeling Problem Formulation Wizard 112,132; Methods Selector 114,144; Simulation Modeling Management 116,146; Analytical Modeling 118,148; and Numerical Modeling 120,150. It will be appreciated that other embodiments may comprise of different models in other arrangements.

Operation Exception Management component (OEMC) 86,186 is initiated by store procedures at the data-warehouse, when SLAs/QoSs/PoFs value reached there define thresholds; SLAs/QoSs are set in MASQFTC, re above; PoFs are monitored in Resource Share Management component (RSMC) 78,178, which match between values of Model Object resource object PoFs and its short term forecast values (set by prior initiation of Forecasting component (FC) 76,176, which is run minimum every 24 hours or otherwise as define in Apparatus parameters); RSMC is batch based job, initiation as defined in Apparatus parameters; OEMC set values for exception record set by Grid Technical Analysis Protocol - Management (GTAPMC) component, re FIG. 3;

The implementation in accordance to an embodiment is specific UML environment as per 3^{rd} party tool support use through this embodiment's PoFs process for Object Management Group, Inc. (OMG) unified modeling language (UML) 2.0 standard. However the concept of this embodiment is supportive of any modeling language with capability for: (1) modeling activities/scenarios (e.g. UML sequence diagrams) flow; (2) static (e.g. UML Collaboration Diagrams) and stat flow (e.g. UML Statechart Diagrams) that needs for performance modeling; (3) industry standard that use for performance analyst and software development professional to co-interact as per common view of the system's architecture.

The system may be dynamic or fixed. For example, the following scenarios:
(1) synthetic workload model uses for modeling and monitoring is of 'SYSTEM' demand on key system's resources, within a close past time period; any SYSTEMi configurations of 'SYSTEM', constructed and performed within this past time period, is performed demand on some of 'SYSTEM' key system's resources; hence the overall health of 'SYSTEM' can be good approximated to overall health of SYSTEMi, by measuring PoFs;
(2) in case of: (I) very large 'SYSTEM', where many different SYSTEMi can take place (e.g. Internet as a 'SYSTEM'), then clearly the PoFs method and Apparatus will not provide good approximation for SYSTEMi's PoFs prediction; however the embodiment can use for prediction PoFs of SYSTEMi's component, i.e. for each sub system participate in dynamic interaction of other sub-systems of SYSTEMi; hence by maintaining for each SYSTEMi's component, which is a system by its own, its SLA/QoS and PoFs then the SLA/QoS/PoFs for SYSTEMi are maintain - 'weakest link'; (II) 'SYSTEM' with high variation of SYSTEMi configuration, then component's PoFs prediction based is provided a good solution for reasons stated above.

### Detailed Example

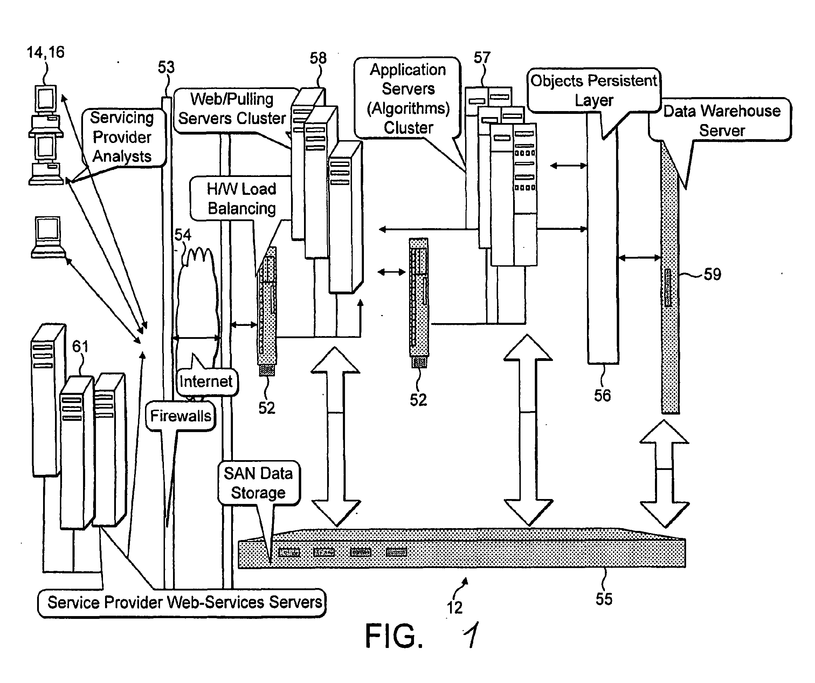

- ***Computing Centre Apparatus -* (re** **FIG. 1****)**: Computing centers were designed as 4 tiers web-servers and application-servers farms (HP 5670 with Red-Hat Linux) with scalable technology. This is an integrated solution of several Apparatus' platforms. The Computing Centre is where all calculation of statistical analysis or mathematical modeling algorithms is performed. Its scalability is based on clustering technology (e.g. BEA's WebLogic), where identical servers are aggregated as a cluster. The main tasks performed in a computing centre are:
   *(-) Data Warehouse:* (1) Loading Enterprise-Infrastructure/Application(s) measurements metrics data, architecture model data, system / transitions logs or system transaction traced data from Clients sites; (2) Data Mining and Normalization to format raw measurement data; (3) Data storage for algorithm's data results.
   *(-) Algorithms:* (1) Monitoring against SLAs/QoSs/PoFs targets/values; (2) generating PoFs; it is an iterative What-If analysis of PoFs' associated models (synthetic workload model based).

### Performance Monitoring Platform (Re FIG. 3)

### Monitoring Against SLA / QoS / PoFs targets

Allows visual monitoring of subject-matter system' architecture deployment model (SDM) , based UML script; and setting performance and availability level targets, where possible; using graphical - aid. Offers to have a pre-defined SLA and QoS targets for Clients as a starting point. When targets are reached then Exception Handling is initiated, re Operation Exceptions Management below. ***Interactivity**:* asynchronous near real time calculation. ***Data**:* database's table. ***UI***: For each Worst Case Scenario Model (WCS) there is at least one SDM; SDM can be visible by updating its content per each active SSM model or SDM is visual for each WCS; this is defined in the system's parameters, e.g. one SDM with record visualized per current active SSM or six SDM are visual per six WCS model; Setting SLA and QoS targets using interface to Enterprise-Infrastructure/Application(s) Architecture Mapper method with capability to set each object's record (e.g. Browser to Application Server response time = 0.01 sec, Database Server CPU Utilization set to 90%) , re FIG. 4. ***Algorithm**:* A suggestive pre-defined SLA/QoS/PoFs are calculated and appeared automatically; initially calculated as current mean value of performance metrics plus 2-3 sigma
SD (define in Apparatus parameter). Client / Analyst can modify these pre-define SLA/QoS using the Enterprise Architecture Mapper interactive tool method (based UML scripting) by setting the record field using generic object' method, e.g. performance metrics can be set (latency, throughput, path length, etc). PoFs are visually and clearly indicated, if SPM have been created and simulated with positive PoFs identification; they visually appear at all times using small screen window visually linked to the subject-matter system's architecture resource in the SDM; ***Business Logic**:* J2EE/.NET component. This component is wrapped around the Enterprise Architecture Mapper component; as the QoS/SLA/PoFs component is required the Enterprise/Application Architecture Model is to be used as a base platform for setting up the SLA/QoS/PoFs level.

### Forecasting

Forecasting includes linear, non-linear, exponential and s-curve projections. Data is saved for 3 months by defaults for an historical trend analysis. Forecasting is used for calibration of PoFs results and resource capacity measurement for some system resources such as memory utilization; forecasting calculation is by default to all PoFs related systems performance parameters; it is calculated in intervals of days of up to 1 months forecasting data. It is used in conjunction with PoFs analysis for short term issue exceptions. ***Interactivity**:* Batch job by default. The business logic will be initiated by mostly scheduled (batch) jobs or ad-hoc (by setting default 24 hours re-calculation, set as trigger in database) ***Data**:* High. As a result of data transmission to and from the Automatic Forecasting Server (e.g. SAS High Performance Forecasting) product need to have high bandwidth (fiber optic / Symmetric by EMC Corporation, Hopkinton, Massachusetts, United States of America). Usage of Data-Warehouse/Data-Mining product for calculating in advance and near real-time of the algorithms parameter sets. ***UI***: forecasting data is loaded by Monitoring against SLAs / QoSs Targets component by updating the forecasting databases table, minimum every 24 hours. ***Business Logic**:* J2EE/.NET component, script programming language to interface the Forecasting server. ***Interfaces**:* Automatic Forecasting Server, Statistical Server, Data Warehouse Platform ***Complexity:*** High ***Templates**:* End-to-End response times, CPU utilization/ memory, Disk, Network analysis, etc.

### Operation Exceptions Management

Exception Management for: (1) PoFs exception handling, with 2-3 sigma SD error windows (defined in Apparatus parameters); (2) Setting SLA/QoS level values as per subject-matter system's architecture resources and performance requirements; (3) performance analysis requests by SPs' Analyst/Systems. In case of SLA/QoSs/PoFs the exception is triggered on SLAs / QoSs / PoFs values level, set by default or by Analyst in SDMs models; it is an database trigger function based; re Monitoring against SLAs / QoSs / PoFs Targets component. Exception is processed in sequence between SPs until resolved, or part of exceptions' pattern process between SPs until resolved. Exception records are inserted / communicated by initiating a call to Grid's Technical Analysis Protocol - Management component method. ***Interactivity**:* High ***Data**:* Low ***UI**:* Interface to Enterprise/Application Architecture Mapper. ***Business Logic:*** J2EE/.NET components, SNMP API for action/broadcasting exception message to SPs' Analysts (by skill-set)/Clients/3^{rd} Party's enterprise management systems or e-mail the same respectively ***Interfaces**: Grid Technical Analysis Protocol - Management.*

### Enterprise/Application Architecture Mapper

Automatic generation of subject-matter system's architecture models from the following sources: (1) model generated by network/enterprise management tools (e.g. IBM's Netview) when converting their output model in XML format to SDM (based UML); thereafter calibrated this model manually whenever it required; (2) automatic generation of Application Architecture from model generated by tools such as Profilers, Agent based model auto discovery; (3) UML design case tools; etc. All SSMs are linked to their SDMs, re PoFs Projection Manager component. ***Interactivity**:* High. ***Data**:* High. Need to have high bandwidth (e.g. fiber optic / EMC - symmetric) connection, usage of Data warehouse product (e.g. Teradata by NCR of Dayton, Ohio, United States of America). ***UI***: Visual Model Architecture view is SDMs (based UML deployment Diagrams) and SSMs (based UML sequence Diagrams) based. With a palette to add / takes nodes. All Nodes and Arcs are described in Modeling Language standard (UML or similar). All performance metrics appear in the system deployment DIAGRAM view: For the above screen a lookup screen view (initiated by mouse - double click) with details on these Nodes (e.g. component ID); SLA/QoS any other system resource forecasting, excluding PoFs, will be visual in window, where activation is by clicking the option set mouse right button; PoFs prediction will appear in separate window with the capability to save/delete baselines if what-if analysis is conducted, it will be visual in separate window, where activation is by clicking the option set mouse right button; per individual system resources: SDM visual mapping with distinguishes connection point of path between nodes of architecture of response time metrics data (metrics set by Performance Analysis Measurement component, re below). *Business Logic:* J2EE/.NET components. *Interfaces:* This component is warping around Performance Analysis Measurement component (re below) and Forecasting component (re above); as all performance metrics data is required to be calculated per all Model's Nodes.

### Performance Analysis Measurement

Measurements of end-to-end performance metrics Performances Metrics cover are: Latency, Path Length. For example for those Clients with cross platform workflow a compass Unix (UNIX is a registered trademark in the United States and other countries of the Open Group) and Windows by Microsoft will allow viewing the correlation of performance info within and across systems revealing dependencies between performance metrics. It's necessary for diagnosing response time problems for system span platforms. Batch job by default, but may be initiated by ad-hoc calls. **Interactivity:** High. **Data**: High. Need to have high bandwidth (e.g. fiber optic / EMC - symmetric) and use of Data warehouse product for data manipulation. **Business Logic:** J2EE/.NET component. **Interfaces:** 3^{rd} party components and/or use of transaction log data output from 3^{rd} party component based ARM 2.0 standard - transaction tracking functions.

### Resource Share Management

This data is essential to map between performance trend (PoFs, short term forecasting) and system resources capacity. Allowing to have various snapshoot of system-resources performance (E.g. CPU: Queue-Length, etc). **Interactivity**: Batch by default. **Data**: Low **UI**: None **Business Logic**: J2EE/.NET components. **Interfaces: Algorithm**: for every subject-matter system performance parameter check the difference between PoFs value to short term forecasting (re Forecasting component) if value above/below 1-2 sigma SD of PoFs then exception handling is generate, re Operation Exceptions Management.

### (a) Monitoring-Execution Scheduler

(1) Invoke Grid's Optimizing Resource Manager component via Web Services protocol with scheduling parameters; (2) Automatically scheduled performance monitoring algorithms run will be by subscription contract constraints and service priority. It allows manual updating of prepared schedules on exception requirements. Provides easy interface to be accessed anywhere on Solution Provider's platform. Dynamic estimation of jobs completion schedules. Dynamic view of work progress schedule. Dynamic triggering of alerts when scheduled jobs fail to complete. Allow booking time-slot for monitoring algorithm run. **Interactivity**: Medium. **Data**: Low. **UI**: J2EE/.NET component. Business Logic: J2EE/.NET components. **Interfaces**: Grid's Optimizing Resource Manager component via Web Services protocol (re below).

### Performance Modeling Platform (Re FIG.4)

### Service Request Manager

The Performance - Modeling process is initiated by the Client's/Analyst's Web-Browser and completed when a report is submitted to the Client/Analyst respectively. All SRs are report related service-requests. Such reports contain model analysis with description of SDMs and their SSMs with detailed description assisting drill down fault diagnostic follow-up or technical decision; or details associated with escalation of issues by SP's Analyst/System (re Exception protocol - Problem Escalation ID). All reports are compiled by SPs' Analysts/Systems and based on: (1) analysis completed as per Clients original/modified models (SSMs and SDMs based), generated via Performance Modeling platform; (2) analysis completed by SPs own systems, where their analysis is with respect to Client's SSMs and SDMs; SRs related records are inserted / communicated by initiating a call to Grid's Technical Analysis Protocol - Management component method.

### Interactivity: High Data: Low. UI: of 3^{rd} party package used and few screens for routing logging SRs via Grid's exception protocol Business Logic: of 3^{rd} party package used (reporting tool: Business Object and E-Commerce tool).

### Modeling Editor

Model Editor can do all functionality of Enterprise / Application Architecture Mapper (re Performance Monitoring). It enables modeling at any system's stages during its life-cycle. Provides Model Design Patterns, in an effort to reduce the time required to build the model. Models types are linked (.e.g. SSMs models to SDMs). This tackles the need for analysis as per complexity of layer of specification on top of the current layer to tackle a more specific modeling problem domain. If Enterprise Architecture Mapper component provides the SSMs and their SDMs model with PoFs, then the Modeling Editor allows: (1) generating models for systems without trace data; (2) enhanced/modified subject-matter system's architecture design, now that a fully calibrated performance model is available. Models are generally built using drag-and-drop graphical representations of pre-defined building blocks as per model type (e.g. UML Deployment diagram, UML Sequence Diagrams, etc), such as queues, servers, transport entities, and logical modules (e.g. if-statements and while-loops). Model building blocks ('design pattern') can be modified into customized building blocks, as required, per model's problem definition. Such modification relates to an industry related component domain. ***Data:*** Medium. Models objects are stored in several tables. ***UI:*** Swing or Java Server Pages (JSP) by Sun Microsystems, Inc. /Servlets. ***Business Logic**: Java* components by Sun Microsystems, Inc.. ***Interfaces:*** This component is wrapped around Enterprise Architecture Mapper component.

### Modeling Workshop Manager

Manages all modeling from one environment by pre-defined methodology selection. Covers initiation of all modeling processes, from model creation up to end-result by dispatching a Report to Client-Area. Allows managing several models object concurrently, e.g. one can perform performance modeling of the same model created/updated using Modeling Editor to conduct performance modeling using analytical modeling of choice and simulation modeling of choice - Discrete Event Simulation, concurrently; it hence allows to calibrate a analytical performance model; which will, at the end of this process, run to provide PoFs prediction, etc; Model object fields are: model ID, state positions, etc; call to components interfaces gives model object by reference. The methodology's routing is hard coded in the component's methods from design simplicity reason. The component main function is to manage the interactivity routing needed at formulating subject-matter system's architecture models and at modeling stage. Such design allows update modeling methodology or interfaces from one component. ***Interactivity:*** High Data: Low ***UI*:** Swing or JSP/Servlets ***Business Logic:*** Java components. ***Interfaces**:* to *most performance modeling components, Reporting Server component*

### Modeling-Problem Formulation Wizard

Wizard tool approach with reference to underlined type of problem (the type of Report required to produce by template generated per report selection). The wizard, a rule based tool enables the use of best-practice by assisting Analyst to formulate the following: (1) Identify problem domain based best practice rules; rules definition using pre-defined templates; (2) Formulating the problem definition (processes and data aspects). Wizard offers a selection of problem patterns that can speed up the process of modeling - problem formulation. Pre-defined templates are hard coded using script language (e.g. extensible markup language (XML)). These templates are loaded at request during the Wizard process where selection is made on tables link to load and make a selection on another table, etc. On selection a call is made to a component (using object invocation) and component's objects fields are set with data selected during the Wizard process. Upon selection made on templates, during the process, a model data object is extracted from the model based UML (every general model is made of linked models, i.e. SSM with SDM and SSTM) to SPM; extraction from UML is made in the Methods Selector component, which calls interactively to set a performance model based selection to be made in the templates. It is the objective using this Wizard, to have a fully configured SPM with specific modeling method selection, e.g. SPM based Stochastic Process Algebra (SPA). ***Interactivity:*** High ***Data:*** Low. Use of templates (tables stored in database) ***UI:*** Swing or JSP/Servlets ***Business Logic:*** Java components. ***Interfaces:** Modeling Workshop Manager Component.*

### Methods Selector

Select a method of choice from a list of methods. Use functionality offering of methods libraries, re Simulation-Modeling Methods Management bean, Analytical-Modeling Methods Management bean, Numerical-Modeling Methods Management bean. Provide guidelines to assist in the selection of a method, re Modeling-Problem Formulation Wizard. This component functions as an intermediary to configure SPM based selection which is made in a Modeling Problem Formulation Wizard component; such selection is made on a model object passed by Modeling Workshop Manager component. The model simulation's selected method is set as a reference in Model object, e.g. Stochastic Petri Net (SPN); actual extraction from UML to performance model is based on existing techniques that is initiated when a call is made to basic functions of simulation libraries. Such techniques are discussed in Hopkins et al., "Two Approaches to integrating UML and Performance Models", Workshop on Software and Performance, Proceedings of the third international workshop on Software and performance Rome, Italy, Pages: 91 - 92 , ACM, 2002, and Whittle et al. "Generating Statechart Designs from Scenarios" NASA Ames Research, USA, International Conference on Software Engineering, ACM, 2000. *Interactivity: None Data: Low UI: None. **Business Logic:*** Java components. ***Interfaces:*** Modeling Problem Formulation Wizard component, Simulation-Modeling Methods Management component, Analytical-Modeling Methods Management component, Numerical-Modeling Methods Management component

### Model Experiment Manager

Tool's point-and-click interactivity translates into faster answers and also quicker and easier re-stating of problems. For example one can modify copy models of subject-matter system's architecture used for performance monitoring facilities (SDMs and SSMs models) and will measure and animate the performance of the modified model by Simulation. The component functions as a What-If analysis object. Updates made to the model object (one model per SSM and SDM per) are automatically converted to unified models, based UML, into SPM per simulation method selected earlier using Modeling Workshop Manager; the animation capability is via simulation package's functions; on completion simulation run and then the simulated values (including PoFs) in the model object are updated; Saving the model object in the database is by using menu/mouse-click save selection. **Connectivity.** Initiated Report Wizard and save Report. Can also search for an optimal configuration of a system interactively by optimizing PoFs set. ***Interactivity:*** High ***Data:*** High ***UI:*** Swing JSP/Servlets ***Business Logic:*** Java components, wrapped around Modeling Editor component. ***Interfaces**:*

### Simulation-Modeling Methods Management

On component creation an extraction of SPM is made from it linked SSTM by used of PEPA upon SSTM's statechart and collaboration models result in PEPA model, which can used as input to: (1) Mobius software, which can generate distributed discrete-event simulation. Run simulation until a certain confidence level is statistically achieved. Initiate a simulation package libraries functions based Simulation Modeling upon performance model (i.e. model object) ***Interactivity**:* High ***Data:*** High ***UI:*** Swing JSP/Servlets ***Business Logic**:* Java components wrapping around Modeling Editor component.

### Analytical-Modeling Methods Management

On component creation an extraction of SPM is made from it linked SSTM by used of existing techniques upon SSTM's statechart and collaboration models result in performance model (e.g. layer queuing network (LQN))
An approximation technique is used to model deterministic service times. Initiating a simulation package libraries functions based on Analytical Modeling upon performance model (i.e. model object) ***Interactivity**:* High ***Data**:* Medium **UI**: Swing, JSP/Servlets Business Logic: Java component. ***Business Logic**:* Java components wrapped around a Modeling Editor component.

### Numerical-Modeling Methods Management

On component creation an extraction of SPM is made from it linked SSTM by: (I) used of PEPA (used with exponential probability distribution) upon SSTM's statechart and collaboration models result in PEPA model, which can used as input to: (1) PRISM 2.0 tool , which can generate the numerical models of: discrete-time Markov chains (DTMCs), continues-time Markov chains (CTMCs) and Markov decision processes (MDPs); (2) IPC compiler which can generate DNAmaca format, used for analyzing very large Markov models; or use this model for Stochastic Process Algebra (SPA) modeling; (II) use of Stochastic Petri Net (SPN) existing software (e.g. Trivedi's SPNP) Markov chain and similar techniques. Initiate a simulation package libraries functions based Numerical Modeling upon performance model (i.e. model object) ***Interactivity:*** High ***Data**:* Medium **UI:** Swing, JSP/Servlets ***Business Logic:*** Java component. ***Business Logic**:* Java components wrapped around Modeling Editor component.

### Models -Execution Scheduler

(1) Invoking Grid's Optimizing Resource Manager component via Web *Services protocol* with scheduling parameters; (2) Providing automatic scheduling of simulation and other models to run within specified period. Allows manual updating of prepared schedules. Provides easy interface to be accessible anywhere on Solution Provider platform. Dynamic estimation of jobs completion schedules. Dynamic view of work progress schedule. Dynamic triggering of alerts when scheduled job fail to complete. Allows to book a time-slot for a model run. ***Interactivity:** Medium Data: Low **UI:** Swing or JSP*/*Servlets **Business Logic:** Java components **Interfaces:** Grid's Optimizing Resource Manager component via Web Services protocol (re below).*

### Data Warehouse Services Platform

Support all Solution Provider's platform by doing Data-Polling from Clients or 3^{rd} Party sites. Data Validation (completeness, Integrity) Data Normalization: Mapping and Calculation of the parameters sets required by the algorithms required to run as per Client's subscription package (or 3^{rd} party SPs contract). **Data Volumes:** It is estimated that data size requirements per Client / SP is 15-20mb. The number of Clients at any point in time is 250-500 per Computing Centre therefore data-volume requirement at any point in time is about: 5 TB - 10 TB (tera-data) **Flexibility:** Medium. Need to maintain balance of developing generic DW function (e.g. Teradata bespoke API). **Performance:** High. Performance is the key consideration when selecting a DW package. Teradata was selected based on a benchmark result of TCP-H (year 2002) where its price/performance ratio is the highest in the category ofDW with data above 1000GB. Availability: 7 X 24

### Measurement Collection Management

**Primary Requirements:** FTP-based pulling from Clients' site, subject-matter system resources' measurement data files. Database-to-database transmission of subject-matter system resources' measurement data records. This is the preferred choice as transmission is quicker and reduces effort at the data warehouse point of saving the raw data at the database. Measurements data originating at files/records collected by the enterprise management system of choice at client/3dr party (e.g. HP-OpenView or IBM-NetView, etc). Data filtering: the selection of data needed to be loaded on platform's Solution (Computing Centers, Collaboration) server must be very rigid; only data required per client package is transferred to Solution platform's (Computing Centers, Collaboration)'s server. Data filtering is by using data scripts, which are client-package-templates based. Data Transfer: Central connection topology: Use of pulling servers, which are connected to NCR-Teradata via high speed cables (e.g. Fiber Optics, etc). The Pulling servers are set as a cluster, allowing scalability and failover consideration. Alternatively using Network connection topology: use of pulling servers, each located to serve a subset of Clients within a geographical area. The servers are all connected to a Computing centre via high speed cables (e.g. Fiber Optics, etc). Scalability is achieved by installing a new server per geographical location. Failover is achieved by setting a group of 2-3 servers, within close geographical proximity as a cluster. Use high speed transfer platform Validation on transfer success Use log files/database records Use of pulling package component. Check for data size expected and that data details item are consistence with data head-footer if send. **Optional Requirement:** The performance Agent (wrapped around package component) is collecting system metrics from: App.-Server, Database Server, Web-Server, File/Print Server, PC Desktops, Unix Desktops and do: Time-Stamp / Log data in database. Performance Agent: Low overhead continues collection and logging of more than 300 global, process, application and system metrics. Discover the devices determining what data should be collected and how frequently Proactive performable reporting on widely used IT infrastructure building blocks including: Routers , Frame Relay , local area network (LAN), wide area network (WAN), remote network monitoring (RMON)/RMON2, and ATM Agents are available from system-management vendors and third party that literally support hundreds of platforms, including hardware servers, network devices, applications and database servers. Automatic data collection, with low overheads, typically < 2%, at very high granularity. Data-Collection scalability. By default, data is collected every 60 seconds, but one can easily change it to fit ones needs. ***State:*** State-full and Asynchronous Algorithms. Need to identify a method to make the data collection agent (on client's production platform) light as possible for the performance monitoring. ***Interactivity:*** Batch by default *Data:* Very High. Must use high bandwidth and compression techniques **UI: *Business Logic:*** Java components wrapped around 3^{rd} party data pulling component. BEA-WebLogic Server - Clustering API.

### Normalized Measurement Data

Comparison and correlation of application and system resource measurements. Control data aggregation and sophisticated analysis to support reports. Data aggregation into periods of time, such as 10 minutes, 1 hour, or 1 day. Data formulation to parameters set required for performance monitoring and modeling algorithms. ***Interactivity**: Batch by default **Data**: High.*

### UI: None Business Logic: Java components, 3^{rd} party components (simulation, analytical modeling), NCR-Teradata API.

### Analyst - Resources Manager

Analysis resources are scheduled on projects and on-going assignments via this component. The scheduling is set automatically per criteria of: availability, skill, location, Analysis type (back-office or Local-office site), Analysis duration and link assignments. The scheduler can be updated manually by Analysis admin staff. General resources booking principals are applied to allow capacity for future booking, etc. Allowing analysis of: resources productivity, exception ratio per work booked, Analysis work growth by skill, etc. Such data can be with graphical interface (E.g. Microsoft's Excel). ***Interactivity:** Batch by default **Data**: Low. **UI**: None **Business Logic**: Java components, 3^{rd} party components - scheduling package.*

### PoFs Platform (Re FIG.5, 6, 7A and 7B)

### Worst Case Scenarios (WCSs) Identification

Identify WCSs as per key system parameters. By: (1) Analyst make a selection upon pre-defined list (of key system/component performance parameters (KSPPs/KCPPs) list) by making selection with respect to subject-matter systems' architecture (or subject-matter system's component) type, e.g. in the case of distributed middleware component, then key middleware component's performance parameters are: CPU Queue, I/O rates, etc; a list is visualized by scroll-down window; the pre-defined KSPPs/KCPPs are in a template format; these templates are industry best-practice based; (2) Analyst set search constraints using a defined criteria window; constraints are: elapse time search (e.g. one hour), Period Range: start end period (e.g. 1-3 months), period (Monday-Friday or Monday-Sunday), Date Range (8-12pm or 12pm-12am), etc (3) a simple database search is initiated, store-procedure base, of all WCSs per each selected KSPPs/KCPPs; (4) then a simple database search per all system/transaction logs for data with WCSs set (for all KSPPs/KCPPs) building intermediary data tables for SSMs model generating. ***Interactivity**: Medium **Data**: High **UI**: Few screens for making the selection at per WCSs search parameter **Business Logic**:* Java components. ***Interfaces**:*

### Worst Cases Scenarios Models Construction

Constructing all WCSs model based UML. By: (1) Construct SDM by the same method described in an Enterprise / Application Architecture Mapper component (re above); (2) for each WCS in WCSs set construct system scenario model (SSM) and system state model (SSM) while linking them to SDM nodes , e.g. SSM entities iteration as per SDM entities; SSMs and SSTM models are based UML; SSTM is combine two objects model of Statechart model based UML and Collaboration model based UML; the method comprises: (I) For each WCS, from WCSs set, create a new SSM and SSTM object; (II) Search through intermediary data tables constructed and for each WCSs set pointers per individual entity and conduct search at all logs, from start time range through its end; the search is for patterns of set event occurring in individual entities in the logs; a pattern is considered valid if there is a reference to a similar pattern possible in the SDM; hence the reference to SDM acts as validation rule; if a pattern is successfully checked or validity then the pattern is listed temporary in the linked events temporary tables; tables based XML to be converted to UML model script; (II) a check is conducted to remove a short live event and reduce WCSs to the events with the longest latency as per time range; a search is conducted in the intermediary pattern tables in order to match the rule of: pattern occur at 75-100% time in the time range (start ≤pattern time range ≤end range); pattern links not matching this rule are discarded; (IV) generate the selected SSMs and SSTMs (UML Statechart and UML Collaboration models based); SSMs model are convert from linked events temporary tables; SSTMs are create by automatic generating their correlated SSMs using exiting techniques, and set measured values as per SSMs in the link table associated with their SDMs data; (V) at this point it may be that there are still too many WCSs for PoFs monitoring; Analyst can reduce such issue by iteratively: increase the upper limit of pattern occur (e.g. 90-100% occurrence in the time range), the 'real' minus the `defined' in UI parameters or Analyst has a visual view of SDM with SSMs and their PoFs (re Modeling Editor) then reduce SSMs as see fit. On constructing SSMs then track and set the time interval between massages, along with the objects name; such probabilistic timings can use for discrete event simulation whenever occurred.

### Interactivity: None Data: High (complete at computing center high speed data access hardware by NCR-Teradata data warehouse), UI: Medium. Business Logic: Java components. Interfaces:

### PoFs Identification

Using UPMF methods will produce System Performance Model (SPM) with PoFs. These PoFs are simulation based only, hence temporary values; without reference to computing requirements; it is hence required to calculate PoF for each current PoFt in FoFt set. Subject-matter System (or component) computing requirement is set by: (1) such data can be imported from Enterprise System Management (e.g. HP Open View, CA TNG); or (2) set manually in a table format - subject-matter Apparatus' parameters. Using model verification techniques can produce the probability, that in event of current PoFs the systems will reach the point of system computing jobs backlog level (CBBL); weighted parameters will be used to identify that some PoFs have more impact system failure then others; PoFs are set in model (based UML) only for probability above 85% of CBBL; the expectation is that Analyst, when initiating Model Editor component, will re-iterate WCSs models simulation using different period range until received 'positive' PoFs for all WCs. ***Interactivity**: None **Data**: Low **UI**: None. **Business Logic**:* Java components, Model Verification package API,

### Interfaces:

### PoFs Projection Manager

The component manages the PoFs process in line with the above logic. ***Interactivity**: None **Data**: None **UI**: None. **Business Logic**: Java components. **Interfaces**: PoFs Identification component, Worst Cases Scenarios Model Construction component.*

### Grid's Protocol Platform

### Grid's Optimizing Resource Manager

Automatically (or manually by designated SP) scheduled per monitoring and modelling task at Computing Centres. ***Interactivity:** High **Data:** Low UI: Few screens. **Business Logic:** Java components. Interfaces: 3^{rd} party scheduling* package.

### Grid Technical Analysis Protocol - Management

(1) When receiving problem massage then perform the following: load exception record if text then route for SP's Analyst attention; if formula then link to application method call invocation use standard protocol; (2) Analyst may act on the problem and generate a message with a success field set to 1; or the same but with adding a new problem (with new exception (set time limit and Problem Escalation ID - with is own SP's ID, SP's Analyst ID or designated SP's ID for type of problem, i.e. SP's ID (back-office call centre), SP's ID (Client's Account Manger)) and new problem inserts); or forward to the next SPs; SPs are selected at random from making a selection in a skill set list; (3) Initiate a new problem message; (4) Insert Exception record. ***Interactivity:** High **Data:** Low **UI:** Low. **Business Logic:*** Java components.

### Interfaces:

### Grid Technical Analysis Protocol - Exception Handling

Insert an exception record in Exception table, access via Grid. The record is set by: (1) Computing center (CC) ID , unique 3 bit code; (2) Exception ID, unique 17 bit code; both together set a unique exception primary key; it is excepted that all exceptions will be cleared within one month from the Grid; (3) Text / Formula ID, 1 bit code; 0 for Text, 1 for Formula; (**4**) Description ID , a 24 bit, if a Text/Formula is 0 then it gives reference for a text record to be used by an Analyst, if 1 then links to an XML script to be used by SPs application rather then an Analyst; text or Formula fields are set by Analyst; automatic exceptions generate text only error messages; (5) Time Limit value, date/time stamp + SLA/QoS/PoFs values; a value which SPs are contracted to handle exception by client package/contract, this value is defined in Apparatus' parameters as per client service package; this value is monitored by a database trigger who initiated a call for review of this exception by Analyst; database trigger is set in the exception table; when it activated it sent error massage to the Problem Escalation ID (re below) to be managed by designated SP's Analyst manually; (6) Problem Escalation ID, 14 bit code; this field is set according to the context of exception, which is SLA/QoS/PoFs based and ad-hoc technical analysis including some scenarios of logging SRs; few examples: in case of some of logging SRs it set to Client Account Manger ID (SP's ID with skill set equal account manager); or in case of PoFs then it set to Back-office Analyst (SP's ID with skill set equal back-office analyst for this CC), etc; ***Interactivity:** Low **Data:** Low **UI:** One screen with FormulalText error insertion by an Analyst, initiate interactively on ad-hoc basis. **Business Logic:*** Java components. ***Interfaces:***

### Grid Technical Analysis Protocol - Problem setting Handling

Inserting a problem record in Problem tables, access via Grid. It set: (1) Problem ID, 17 bit code; (2) Computing center (CC) ID, unique 5 bit code; together set a unique primary code; (3) skill set ID, 6 bit code; identify the type of technical analysis needed; this value is map per exception error origination; e.g. (I) PoFs exception on CPU/IO then to a Background analysis SPs; (II) SLA/QoS triggering a exception error as per component where few SPs have visibility, it is forward to one of them; (III) Analyst comes across an issue that would need a complex analysis involved specialized SPs - Network Diagnostic SP, BEA's WebLogic Diagnostic SP, Switch Diagnostic SP by Cisco Systems, Inc. of San Jose, California, United States of America; (III) Analyst may wish to refer analysis from those SPs (re (II)) to another SPs for his review; (3) Problem Originator ID, 14 bit code; it set to SPs unique code in the Grid, as in example (I) and (II); or it set to the SPs code of the forwarded SP's ID, as in example (III); (4) success/fail ID, 1 bit code; o fail by default; 1 for success (5) Exception ID code, re Grid Technical Analysis Protocol - Exception Handling; ***Interactivity:** None **Data:** Low **UI:** one screen with fields that cannot be set by default. **Business Logic:*** Java components. ***Interfaces:***

### Alternative implementation

Embodiment implementation is the only economical implementation viable using current technologies and that can be implemented in line with the concept of this embodiment.
The need for performance monitoring with modeling system's architecture is a fundamental requirement as long as its architecture structure is not trivial. System performance can be analyzed at source or remotely. The computing requirements of monitoring and modeling algorithms at large aren't feasible at source. Therefore, any performance analysis at source is limited in scope which leads to a degrading value of analysis. Scope is limited as computing performance-analysis algorithms at source result in counterproductive performance improvement as direct impact of their own computing requirements. Therefore the only viable option is remote analysis. The best implementation of the embodiment concept is the one that balances system resources (servers, data storage, etc) with worldwide geographically distributed locations. This is in the aim to provide performance monitoring with modeling services to most enterprises worldwide and at an affordable price. Other considerations in the design of embodiment's implementation are the use of reliable components that can be integrated well as well as following best practices system architecture design.

### Alternative applications

The embodiment can be applied to any sector where performance analysis can be applied to customer's system measurement metrics in the case of monitoring and can be applied to customer's system data model and/or workload trace-data in the case of modeling. The design of embodiment implementation allows scaling up with respect to any system under analysis and service is expected to be available worldwide. The only modification expected if the embodiment is used outside the IT/Telecom sectors is detailed design of some of the modeling algorithms, where the high level system design will stay intact. An embodiment method can be applied to any sector where performance analysis services are required. Examples of other sectors apart of IT/Telecom sectors where the embodiment can be applied are: (1) Manufacturing; (2) Engineering (3) Etc.

It will be understood that the method and system described above provides advantages. The commercial impact of this innovation technology is: (1) enabling better positive impact of systems, supports business processes, by maximizing adaptability of systems following the business dynamic; hence, improving business productivity and agile-ability;(2) convergence of software engineering technology and methods with infrastructure management tools and method; (3) once successfully implemented it has the potential to allow 'just in time and just right' design modification by software and/or hardware components, hence reducing over capacity expenditure; equally it will reduce cost associated with system failure as per under capacity issues; (4) transparency, efficiency and increased quality and completeness of technical analysis at a cost effective price; (5) enabling platform framework to be built on or integrate further technology in any area of technology analysis. It will be appreciated that specific embodiments of the invention are discussed for illustrative purposes, and various modifications may be made without departing from the scope of the invention as defined by the appended claims.

## Claims

1. A method of performance modelling, monitoring and analysis of a computing system for which there is an accessible data log of the system's activity including data relating to a plurality of the system resources when carrying out a number of computing jobs, comprising:
constructing, in multidimensional parameter space having parameters each corresponding to a different one of the computing system's resources, a synthetic workload model for the system by defining threshold constraint values for the system resources that define a closed volume in the multidimensional space outside which the computing of computing jobs by the system is carried out in a bottleneck condition;
compacting the synthetic workload model by limiting its parameters to only a number of key system resource parameters;
searching the data berg of the system's activity for pairs of key system resource parameters comprising a selected one of the key system resource parameters paired with one of the non-selected key system resource parameters for which the pair-defined threshold constraints of the synthetic workload model are exceeded and thereby identifying from the data log of the system's activity entries representing a set of worst case scenario time slots and their computing jobs causing the bottleneck in the system's resources;
for each worst case scenario time slot, reverse engineering the states of the computing system during that time slot based on the data log for that time slot using Unified Modelling Language by:
constructing a system deployment model (SDM) as a UML deployment diagram having nodes representing components of the system monitored during the worst case scenario time slot;
constructing a system scenario model (SSM) as a UML sequence diagram of the interaction between processes carried out on the nodes of the system deployment model as a result of the computing jobs of the worst case scenario time slot;
from the SSM, constructing a system state model (SSTM) as a UML statechart and a UML collaboration diagram which are together representative of the state of the system components at different static positions of the SSM;
then, from the SSTM for each worst case scenario time slot, creating a system performance model (SPM) of the system for the time slot by modelling the system using a modelling method to estimate the probability that the system will be in each of its various states;
determining, from each SPM, a point of failure (PoF) of the selected key system resource parameter as the level of the that system resource at which the probability that the performance of the computing system will not meet a given performance requirement for the system exceeds a given probability for the system;
and
thereafter monitoring the selected key system resource of the computing system and analysing it in relation to a threshold defined by the point of failure (PoF) of that system resource.

2. A method as claimed in claim 1, wherein creating a system performance model (SPM) of the system for the time slot comprises stochastically modelling the system using a modelling method to estimate the probability that the system will be in each of its various states.

3. A method as claimed in claim 1 or 2, wherein the given probability that the performance of the computing system will not meet a given performance requirement for the system is defined in a Service Level Agreement (SLA) for the system or a Quality of Service (QoS) specified for the system.

4. A method as claimed in claim 1, 2 or 3, further comprising calculating a point of failure (PoF) for each of the key system resource parameters by selecting them in turn and for each key system resource parameters, identifying the worst case scenario time slots, reverse engineering the states of the computing system during those time slots, creating a system performance model (SPM) of the system for each of those time slots, and determining, from each SPM, a point of failure (PoF) of that key system resource parameter.

5. A method as claimed in any preceding claim, wherein the point of failure (PoF) for a key system resource parameter is calculated as an average of the points of failure determined for each SPM of each worst case scenario for that key system resource parameter.

6. A method as claimed in any preceding claim, further comprising compacting the set of worst case scenario time slots for each key system parameter by selecting only those having the longest latency.

7. A computing device for performance modelling, monitoring and analysis of a third party computing system, the computing device having access to a data log of the third party computing system's activity and the computing device having a data processor and a memory comprising instructions which when run on the data processor cause the computing device to be operable to carry out the method of any preceding claim.

8. A computer program product which when run on a computing device having a processor causes the computing device to be operable to carry out the method of any of claims 1-6.

## Patentansprüche

1. Verfahren zur Leistungsfähigkeitsmodellierung, Überwachung und Analyse eines Rechnersystems, für das es ein zugreifbares Datenlog der Aktivität des Systems einschließlich Daten gibt, die sich bei Ausführung einer Reihe von Rechenarbeiten auf eine Vielheit der Systemressourcen beziehen, umfassend:
Konstruieren, im mehrdimensionalen Parameterraum, der Parametern aufweist, die jeweils einer verschiedenen der Ressourcen des Rechnersystems entsprechen, eines künstlichen Arbeitsbelastungsmodells für das System durch Definieren von Schwellenwert-Einschränkungswerten für die System-Ressourcen, die ein geschlossenes Volumen im mehrdimensionalen Raum definieren, außerhalb dessen das Rechnen der Rechenarbeiten durch das System in einem Engpasszustand ausgeführt wird;
Kompaktieren des künstlichen Arbeitsbelastungsmodells durch Begrenzen seiner Parameter auf nur eine Reihe von Schlüssel-Systemressourcenparametern;
Durchsuchen des Datenlogs der Aktivität des Systems auf Paare von Schlüssel-Systemressourcenparametern, die einen selektierten Parameter der Schlüssel-Systemressourcenparameter umfasst, der mit einem der nicht selektierten Schlüssel-Systemressourcenparameter gepaart ist, für welche die paardefinierten Schwellenwerteinschränkungen des künstlichen Arbeitsbelastungsmodells überschritten werden und dadurch Identifizieren, anhand des Datenlogs der Aktivität des Systems, von Einträgen, die einen Satz von Schlimmstfall-Szenario-Zeitschlitzen und deren Rechenarbeiten repräsentieren, die den Engpass in Ressourcen des Systems verursachen;
für jeden Schlimmstfall-Szenario-Zeitschlitz, Reverse-Engineering der Zustände des Rechnersystems während jenes Zeitschlitzes beruhend auf dem Datenlog für jenen Zeitschlitz unter Verwendung von Unified Modelling Language (Vereinheitlichter Modellierungssprache) durch:
Konstruieren eines System-Deployment-Modells (SDM) als ein UML-Deployment-Diagramm mit Knoten, die Komponenten des Systems repräsentieren, die während des Schlimmstfall-Szenario-Zeitschlitzes überwacht wurden;
Konstruieren eines System-Szenario-Modells (SSM) als ein UML-Sequenzdiagramm der Interaktion zwischen Prozessen, die auf den Knoten des System-Deployment-Modells als Ergebnis der Rechenarbeiten des
Schlimmstfall-Szenario-Zeitschlitzes ausgeführt werden;
aus dem SSM, Konstruieren eines Systemzustandsmodells (SSTM) als eine UML-Zustandstabelle und eines UML-Kollaborationsdiagramms, die zusammen den Zustand der Systemkomponenten an verschiedenen statischen Positionen des SSM repräsentieren;
dann, aus dem SSTM für jeden Schlimmstfall-Szenario-Zeitschlitz, Erstellen eines Systemleistungsfähigkeitsmodells bzw. System-Performance-Modells (SPM) des Systems für den Zeitschlitz durch Modellieren des Systems unter Verwendung eines Modellierungsverfahrens, um die Wahrscheinlichkeit zu schätzen, dass das System in jedem seiner verschiedenen Zustände sein wird;
Ermitteln, aus jedem SPM, eines Ausfallpunkts (PoF) des selektierten Schlüssel-Systemressourcenparameters als die Ebene jener System-Ressource, auf der die Wahrscheinlichkeit, dass die Leistungsfähigkeit des Rechnersystems nicht eine gegebene Leistungsfähigkeitsanforderung für das System erfüllen wird, eine gegebene Wahrscheinlichkeit für das System überschreitet; und
danach Überwachen der selektierten Schlüssel-Systemressource des Rechnersystems und Analysieren deren Beziehung zu einem durch den Ausfallpunkt (PoF) jener Systemressource definierten Schwellenwert.

2. Verfahren wie in Anspruch 1 beansprucht, wobei Erstellen eines Systemleistungsfähigkeitsmodells bzw. System-Performance-Modells (SPM) des Systems für den Zeitschlitz stochastisches Modellieren des Systems unter Verwendung eines Modellierungsverfahrens umfasst, um die Wahrscheinlichkeit zu schätzen, dass das System in jedem seiner verschiedenen Zustände sein wird.

3. Verfahren wie in Anspruch 1 oder 2 beansprucht, wobei die gegebene Wahrscheinlichkeit, dass die Leistungsfähigkeit des Rechnersystems eine gegebene Leistungsfähigkeitsanforderung für das System nicht erfüllen wird, in einem Service-Level-Agreement bzw. einer Service-Ebenen-Vereinbarung (SLA) für das System oder einer Dienstleistungsqualität (QoS) definiert ist, die für das System spezifiziert ist.

4. Verfahren wie in Anspruch 1, 2 oder 3 beansprucht, das weiter Berechnen eines Ausfallpunkts (PoF) für jeden der Schlüssel-Systemressourcenparameter durch deren Selektieren der Reihe nach für jeden der Schlüssel-Systemressourcenparameter, Identifizieren der Schlimmstfall-Szenario-Zeitschlitze, Reverse Engineering der Zustände des Rechnersystems während jener Zeitschlitze, Erstellen eines System-Leistungsfähigkeitsmodells (SPM) des Systems für jeden jener Zeitschlitze und Ermitteln, aus jedem SPM, eines Ausfallpunkts (PoF) jenes Schlüssel-Systemressourcenparameters umfasst.

5. Verfahren wie in einem beliebigen vorhergehenden Anspruch beansprucht, wobei der Ausfallpunkt (PoF) für einen Schlüssel-Systemressourcenparameter als ein Mittelwert der Ausfallpunkte berechnet wird, die für jedes SPM des Schlimmstfall-Szenarios für jenen Schlüssel-Systemressourcenparameter ermittelt wurde.

6. Verfahren wie in einem beliebigen vorhergehenden Anspruch beansprucht, das weiter das Kompaktieren des Satzes von Schlimmstfall-Szenario-Zeitschlitzen für jeden Schlüssel-Systemparameter durch Selektieren nur jener umfasst, welche die längste Latenz aufweisen.

7. Rechenvorrichtung für Leistungsfähigkeitsmodellierung, Überwachung und Analyse eines Rechnersystems einer Drittpartei, wobei die Rechenvorrichtung Zugriff auf ein Datenlog der Aktivität des Rechnersystems der Drittpartei hat und die Rechenvorrichtung einen Datenprozessor und einen Speicher hat, der Befehle umfasst, die, wenn auf dem Datenprozessor laufend, bewirken, dass die Rechenvorrichtung betriebsfähig ist, das Verfahren eines beliebigen vorhergehenden Anspruchs auszuführen.

8. Computerprogrammprodukt, das, wenn auf einer Rechenvorrichtung laufend, die einen Prozessor hat, bewirkt, dass die Rechenvorrichtung betriebsfähig ist, das Verfahren nach einem beliebigen der Ansprüche 1-6 auszuführen.

## Revendications

1. Procédé de modélisation, de surveillance et d'analyse de la performance d'un système informatique pour lequel il y a un journal de données accessible de l'activité du système comprenant des données ayant trait à une pluralité des ressources du système lors de l'exécution d'un certain nombre de travaux informatiques, comprenant :
la construction, dans un espace de paramètres multidimensionnel ayant des paramètres correspondant chacun à une ressource différente des ressources du système informatique, d'un modèle de charge de travail synthétique pour le système en définissant des valeurs de contrainte de seuil pour les ressources du système qui définissent un volume fermé dans l'espace multidimensionnel à l'extérieur duquel l'exécution de travaux informatiques par le système est effectuée dans un état de goulot d'étranglement ;
le compactage du modèle de charge de travail synthétique en limitant ses paramètres à seulement un certain nombre de paramètres de ressources clés du système ;
la recherche dans le journal de données de l'activité du système de paires de paramètres de ressources clés du système comprenant un paramètre sélectionné des paramètres de ressources clés du système apparié avec un des paramètres de ressources clés du système non sélectionné pour lequel les contraintes de seuil du modèle de charge de travail synthétique définies pour la paire sont dépassées et l'identification de cette façon à partir du journal de données de l'activité du système d'entrées représentant un ensemble de créneaux temporels à scénarios de la pire éventualité et leurs travaux informatiques causant le goulot d'étranglement dans les ressources du système ;
pour chaque créneau temporel à scénario de la pire éventualité, l'ingénierie inverse des états du système informatique pendant ce créneau temporel en se basant sur le journal de données pour ce créneau temporaire en utilisant le langage de modélisation unifié (UML) en :
construisant un modèle de déploiement de système (SDM) comme un diagramme de déploiement UML ayant des noeuds représentant les éléments du système surveillés pendant le créneau temporaire à scénario de la pire éventualité ;
construisant un modèle de scénario de système (SSM) comme un diagramme de séquence UML de l'interaction entre les processus exécutés sur les noeuds du modèle de déploiement du système par suite des travaux informatiques du créneau horaire à scénario de la pire éventualité ;
construisant, à partir du SSM, un modèle d'état du système (SSTM) comme un tableau d'états UML et un diagramme de collaboration UML qui, ensemble, sont représentatifs de l'état des éléments du système aux différentes positions statiques du SSM ;
puis, à partir du SSTM, pour chaque créneau temporaire à scénario de la pire éventualité, la création d'un modèle de performance de système (SPM) du système pour le créneau temporaire en modélisant le système en utilisant un procédé de modélisation afin d'estimer la probabilité que le système sera dans chacun de ses divers états ;
la détermination, à partir de chaque SPM, d'un point de défaillance (PoF) du paramètre de ressource clé du système alors que le niveau de cette ressource du système auquel la probabilité que la performance du système informatique ne répondra pas à une exigence de performance donnée pour le système dépasse une probabilité donnée pour le système ; et
ensuite, la surveillance de la ressource clé du système sélectionnée du système informatique et l'analyse de celle-ci par rapport à un seuil défini par le point de défaillance (PoF) de cette ressource du système.

2. Procédé selon la revendication 1, dans lequel la création d'un modèle de performance de système (SPM) du système pour le créneau temporaire comprend la modélisation stochastique du système en utilisant un procédé de modélisation pour estimer la probabilité que le système sera dans chacun de ses divers états.

3. Procédé selon la revendication 1 ou 2, dans lequel la probabilité donnée que la performance du système informatique ne répondra pas à une exigence de performance donnée pour le système est définie dans un accord sur les niveaux de service (SLA) pour le système ou dans une qualité de service (QoS) spécifiée pour le système.

4. Procédé selon la revendication 1, 2 ou 3, comprenant en outre le calcul d'un point de défaillance (PoF) pour chacun des paramètres de ressources clés du système en les sélectionnant tour à tour et, pour chaque paramètre de ressource clé du système, l'identification des créneaux temporaires à scénarios de la pire éventualité, l'ingénierie inverse des états du système informatique pendant ces créneaux temporaires, la création d'un modèle de performance de système (SPM) du système pour chacun de ces créneaux temporaires, et la détermination, à partir de chaque SPM, d'un point de défaillance (PoF) de ce paramètre de ressource clé du système.

5. Procédé selon l'une quelconque des revendications précédentes, dans lequel le point de défaillance (PoF) pour un paramètre de ressource clé du système est calculé comme une moyenne des points de défaillance déterminée pour chaque SPM de chaque scénario de la pire éventualité pour ce paramètre de ressource clé du système.

6. Procédé selon l'une quelconque des revendications précédentes, comprenant en outre le compactage de l'ensemble de créneaux temporaires à scénarios de la pire éventualité pour chaque paramètre clé du système en sélectionnant seulement ceux ayant le plus long temps d'attente.

7. Dispositif informatique pour la modélisation, la surveillance et l'analyse de la performance du système informatique d'un tiers, ce dispositif informatique ayant accès à un journal de données de l'activité du système informatique du tiers et ce dispositif informatique ayant un processeur de données et une mémoire comprenant les instructions qui, lorsqu'elles sont exécutées sur le processeur de données, rendent le dispositif informatique utilisable pour exécuter le procédé selon l'une quelconque des revendications précédentes.

8. Produit programme informatique qui, lorsqu'il est exécuté sur un dispositif informatique ayant un processeur, rend le dispositif informatique utilisable pour exécuter le procédé selon l'une quelconque des revendications 1 à 6.
